# EUROPEAN PATENT APPLICATION

(11) **EP 4 831 733 A1**
(43) Date of publication of application: **28.10.2026**
(21) Application number: 24915229.9
(22) Date of filing: 30.12.2024
(51) Int. Cl.: G03B 5/00

(54) **MOTOR, CAMERA MODULE AND ELECTRONIC DEVICE**

(30) Priority: 02.01.2024 CN 202410011124
(71) Applicant: Huawei Technologies Co., Ltd., Shenzhen, Guangdong 518129 (CN)
(72) Inventor: LI, Zhangcheng, Shenzhen, Guangdong 518129 (CN); FENG, Minyang, Shenzhen, Guangdong 518129 (CN); CHU, Yutian, Shenzhen, Guangdong 518129 (CN)
(74) Representative: Maiwald GmbH
(86) International application number: PCT/CN2024/143746
(87) International publication number: WO 2025/146015

(57) **Abstract**

This application provides a motor, a camera module, and an electronic device. The motor includes a base, an image stabilization bracket, a first image stabilization magnetic member, a second image stabilization magnetic member, a first image stabilization coil, a second image stabilization coil, a compensation coil, and a compensation magnetic member. The first image stabilization coil faces the first image stabilization magnetic member and is configured to drive the image stabilization bracket to move in a first direction. The second image stabilization coil faces the second image stabilization magnetic member and is configured to drive the image stabilization bracket to move in a second direction. The compensation coil faces the compensation magnetic member. The first image stabilization magnetic member has a first axis, and the first axis passes through a center of the first image stabilization magnetic member. The second image stabilization magnetic member has a second axis, and the second axis passes through a center of the second image stabilization magnetic member. A center of the compensation magnetic member is offset from the first axis and the second axis. The compensation magnetic member is disposed, so that in a movement process of the image stabilization bracket, the compensation magnetic member can provide an acting force for the image stabilization bracket, to avoid flipping of the image stabilization bracket and improve precision of the motor in an image stabilization process.

## Description

This application claims priority to Chinese Patent Application No. 202410011124.3, filed with the China National Intellectual Property Administration on January 2, 2024 and entitled "MOTOR, CAMERA MODULE, AND ELECTRONIC DEVICE", which is incorporated herein by reference in its entirety.

### TECHNICAL FIELD

This application relates to the field of camera technologies, and in particular, to a motor, a camera module, and an electronic device.

### BACKGROUND

Camera modules are usually disposed in electronic devices for image shooting. When taking photos and videos, the camera modules may shake due to external vibrations, affecting image quality on image sensors.

Many image stabilization technologies such as optical image stabilization (Optical Image Stabilization, OIS) have emerged in the market. For optical image stabilization, based on the collected jitter displacement, an OIS motor drives a lens to perform reverse compensation on a plane perpendicular to an optical axis, to compensate for the jitter and achieve image stabilization. However, when a conventional motor drives a lens to translate in one direction, the lens also generates an additional displacement in other directions, leading to low drive control precision of optical image stabilization and poor reliability of the motor.

### SUMMARY

An objective of embodiments of this application is to provide a motor, a camera module, and an electronic device, to provide a motor with a simple overall structure, high control precision, and high reliability.

According to a first aspect, this application provides a motor. The motor includes a base, an image stabilization bracket, a first image stabilization magnetic member, a second image stabilization magnetic member, a first image stabilization coil, a second image stabilization coil, a compensation coil, and a compensation magnetic member. The image stabilization bracket includes a first side portion, a second side portion, and a connection section that are sequentially connected, the first side portion and the second side portion are disposed at an included angle, the first image stabilization magnetic member is fixed to the first side portion, and the second image stabilization magnetic member is fixed to the second side portion. Both the first image stabilization coil and the second image stabilization coil are fixed to the base, the first image stabilization coil faces the first image stabilization magnetic member and is configured to drive the image stabilization bracket to move relative to the base in a first direction, the second image stabilization coil faces the second image stabilization magnetic member and is configured to drive the image stabilization bracket to move relative to the base in a second direction, and the second direction intersects with the first direction. The compensation magnetic member is fixed to the image stabilization bracket, the compensation coil is fixed to the base, and the compensation coil faces the compensation magnetic member. The first image stabilization magnetic member has a first axis, and the first axis passes through a center of the first image stabilization magnetic member and is parallel to the first direction. The second image stabilization magnetic member has a second axis, and the second axis passes through a center of the second image stabilization magnetic member and is parallel to the second direction. A center of the compensation magnetic member is offset from both the first axis and the second axis.

It may be understood that during movement of the image stabilization bracket relative to the base in the first direction, a movement direction of the image stabilization bracket is perpendicular to a magnetic gap between the first image stabilization magnetic member and the first image stabilization coil, and the magnetic gap is not affected by a movement action of the image stabilization bracket. This can avoid a rapid decrease in a driving force caused by an increase in the magnetic gap, thereby ensuring a large and stable image stabilization driving force of the motor, and facilitating a large-stroke design for an optical image stabilization function of the motor.

It may be understood that during movement of the image stabilization bracket relative to the base in the second direction, a movement direction of the image stabilization bracket is perpendicular to a magnetic gap between the second image stabilization magnetic member and the second image stabilization coil, and the magnetic gap is not affected by a movement action of the image stabilization bracket. This can avoid a rapid decrease in a driving force caused by an increase in the magnetic gap, thereby ensuring a large and stable image stabilization driving force of the motor, and facilitating a large-stroke design for an optical image stabilization function of the motor.

When the image stabilization bracket moves relative to the base in the first direction or the second direction, the compensation magnetic member may be configured to provide a first acting force. Because the center of the compensation magnetic member is offset from both the first axis and the second axis, in other words, the center of the compensation magnetic member is neither on the first axis nor on the second axis, the first acting force can generate a compensation moment relative to the image stabilization bracket, to balance a friction moment of the image stabilization bracket. This ensures that a resultant moment applied to the image stabilization bracket can be maintained at zero, to prevent the image stabilization bracket from rotating relative to the base due to a non-zero resultant moment applied to the image stabilization bracket, thereby maintaining control precision and reliability of the motor.

In a possible implementation, the compensation magnetic member is offset from both the first axis and the second axis. This can ensure that the center of the compensation magnetic member is offset from both the first axis and the second axis, and can increase a moment of the compensation magnetic member.

In a possible implementation, the connection section includes a third side portion and a fourth side portion, the third side portion is connected between the second side portion and the fourth side portion, the first side portion and the third side portion are disposed opposite to each other, and the second side portion and the fourth side portion are disposed opposite to each other. The compensation magnetic member is fixed to the third side portion or the fourth side portion. In this case, the compensation magnetic member, the first image stabilization magnetic member, and the second image stabilization magnetic member can be roughly L-shaped. In this implementation, the first image stabilization magnetic member, the first image stabilization coil, the second image stabilization coil, and the second image stabilization magnetic member are arranged on two sides of the motor corresponding to the first side portion and the second side portion of the image stabilization bracket. The compensation magnetic member and the compensation coil are arranged on a side of the motor corresponding to the third side portion of the image stabilization bracket. No mechanical parts are arranged on a side of the motor corresponding to the fourth side portion of the image stabilization bracket. Therefore, the three sides of the motor can be fully used and the remaining side is minimized in size, which is beneficial for an overall compact design of the motor.

In a possible implementation, the compensation magnetic member is located on a side of the first axis close to the second image stabilization magnetic member. It may be understood that the compensation magnetic member is disposed close to the second image stabilization magnetic member, so that utilization of a space of a side of the first axis close to the second image stabilization magnetic member can be improved, which is beneficial for a compact design of the motor.

In a possible implementation, a winding plane of the compensation coil is perpendicular to a third direction, and the third direction is perpendicular to the first direction and the second direction.

It may be understood that, during movement of the image stabilization bracket relative to the base in the first direction or the second direction, the movement direction of the image stabilization bracket is perpendicular to the magnetic gap between the compensation magnetic member and the compensation coil, and the magnetic gap is not affected by the movement action of the image stabilization bracket. This can avoid a rapid decrease in a driving force caused by an increase in the magnetic gap, thereby ensuring a large and stable driving force provided by the compensation magnetic member.

In this case, the compensation coil is disposed horizontally. This helps reduce a space occupied by the compensation coil in the third direction, and helps implement a thin design of the motor.

In a possible implementation, the compensation magnetic member includes one or more magnets, or the compensation magnetic member is a Halbach array.

In a possible implementation, a length of the compensation magnetic member is less than a length of the first image stabilization magnetic member and a length of the second image stabilization magnetic member. In this case, a space occupied by the compensation magnetic member in the motor is small. This helps implement miniaturization of the motor, and reduce manufacturing costs.

In a possible implementation, the motor further includes a first position sensor, a second position sensor, and a third position sensor. The first position sensor is fixed to the base, to detect a first magnetic field variation of the first image stabilization magnetic member when the image stabilization bracket moves in the first direction. The second position sensor is fixed to the base, to detect a second magnetic field variation of the second image stabilization magnetic member when the image stabilization bracket moves in the second direction. The third position sensor is fixed to the base, to detect a third magnetic field variation of the compensation magnetic member when the image stabilization bracket moves in the first direction, and obtain a deflection amount of the image stabilization bracket based on the third magnetic field variation and the first magnetic field variation; and further detect a fourth magnetic field variation of the compensation magnetic member when the image stabilization bracket moves in the second direction, and obtain a deflection amount of the image stabilization bracket based on the fourth magnetic field variation.

It may be understood that, when the image stabilization bracket moves in the first direction, the first position sensor can detect the first magnetic field variation of the first image stabilization magnetic member, and the third position sensor can detect the third magnetic field variation of the compensation magnetic member. If the image stabilization bracket is deflected, displacements of two opposite sides of the image stabilization bracket in the first direction are different. In this case, the first magnetic field variation is not equal to the third magnetic field variation, and the deflection amount of the image stabilization bracket may be obtained based on a difference between the first magnetic field variation and the third magnetic field variation.

In this implementation, when the image stabilization bracket moves in the second direction, the second position sensor can detect the second magnetic field variation of the second image stabilization magnetic member, and the third position sensor can detect the fourth magnetic field variation of the compensation magnetic member. If the image stabilization bracket is deflected, the image stabilization bracket is displaced in the second direction. In this case, the fourth magnetic field variation is not zero, and the deflection amount of the image stabilization bracket may be obtained based on the fourth magnetic field variation.

In a possible implementation, the motor further includes a ball group, the image stabilization bracket is movably connected to the base via the ball group, and the ball group is spaced apart from the compensation coil. Each ball group may include a plurality of balls. A quantity of balls may be five, sixteen, thirty-two, or the like. This is not limited in this application. In this implementation, a movable connection between the image stabilization bracket and a focusing bracket is implemented through the ball group, so that friction resistance between a ball and the image stabilization bracket can be reduced when a sufficient support force is ensured. This can reduce a driving force required to move the image stabilization bracket, in other words, this can help reduce a size of the first magnetic member and/or the first image stabilization coil, and help implement miniaturization of the motor. For example, compared with a conventional large ball diameter, a diameter of each ball in the ball group in this implementation is small. This further helps reduce a spacing between the image stabilization bracket and the base, and helps implement thinning of the motor. In addition, the ball group can provide multi-point support for the image stabilization bracket. This helps disperse stress, prevents the ball from being deformed when the ball is collided due to excessively concentrated forces in a single direction, and can improve reliability of supporting mechanical parts such as the image stabilization bracket and the lens by the ball group.

In a possible implementation, the motor includes a first ball group, a second ball group, and a third ball group. The first ball group is connected to a junction between the first side portion and the second side portion, the second ball group is connected to a junction between the second side portion and the third side portion, and the third ball group is connected to a junction between the fourth side portion and the first side portion. The compensation magnetic member is disposed close to the second ball group. The first ball group, the second ball group, and the third ball group can provide multi-point support for the image stabilization bracket, to improve stability of a relative position relationship between the image stabilization bracket and the ball group, so that movement of the image stabilization bracket is more secure and reliable. In addition, in this implementation, positions of the ball groups are arranged according to a triangle stability principle, so that a quantity of ball groups in the motor can be reduced when reliability of the ball groups is ensured. This helps simplify a structure of the motor. In another embodiment, the ball group may not include the third ball group. Alternatively, the ball group may further include a fourth ball group. This is not limited in this application.

In a possible implementation, the base includes a bottom plate and a first metal member, and the first metal member is embedded in the bottom plate. The bottom plate is provided with a groove, the first metal member includes a support portion, a material of the support portion includes a metal material, at least a part of the support portion is exposed from the groove, and the ball group is located in the groove and is in contact with the support portion. For example, the first metal member may be made of a material such as a steel sheet. This is not limited in this application.

It may be understood that the support portion is disposed, and the ball group is movably connected to the support portion, so that a friction force suffered by the ball group during movement can be reduced, and rotation smoothness of the ball can be improved, thereby helping improve a response rate of the motor when the image stabilization bracket is movably connected to the base via the ball group.

In a possible implementation, the first metal member further includes a reinforcement portion, and the reinforcement portion is connected to the support portion and is located on a side of the support portion away from the ball group. It may be understood that the reinforcement portion can add adequate rigidity to the base, enhance strength of the base, and avoid deformation of the base.

In a possible implementation, the motor further includes a first image stabilization magnetic attraction member, and the first image stabilization magnetic attraction member is fixed to the base and faces the first image stabilization magnetic member to generate a magnetic attraction force with the first image stabilization magnetic member, where the magnetic attraction force causes the image stabilization bracket to be magnetically attracted to the base; and/or the motor further includes a second image stabilization magnetic attraction member, and the second image stabilization magnetic attraction member is fixed to the base and faces the second image stabilization magnetic member to generate a magnetic attraction force with the second image stabilization magnetic member, where the magnetic attraction force causes the image stabilization bracket to be magnetically attracted to the base. Through a magnetic force between the first image stabilization magnetic attraction member and the first image stabilization magnetic member and a magnetic force between the second image stabilization magnetic attraction member and the second image stabilization magnetic member, the image stabilization bracket tends to be close to the base. This ensures that the base, the ball group, and the image stabilization bracket are in contact, thereby implementing pre-tightening, and improving reliability of an optical image stabilization process of the motor.

In a possible implementation, the motor further includes a focusing bracket, where the focusing bracket is located on an inner side of the image stabilization bracket and is movably connected to the image stabilization bracket; a focusing magnetic member, fixed to the image stabilization bracket; and a focusing coil, fixed to the focusing bracket, where the focusing coil faces the focusing magnetic member to drive the focusing bracket to move relative to the base in the third direction, and the third direction intersects with the first direction.

It may be understood that the focusing bracket is located on the inner side of the image stabilization bracket, the focusing coil is fixed to the image stabilization bracket, and the focusing magnetic member is fixed to the focusing bracket. Therefore, a mover assembly for optical image stabilization of the motor surrounds a focusing mover assembly. When the focusing bracket is located on the inner side of the image stabilization bracket, the image stabilization bracket may be disposed around the focusing bracket. The being disposed around may be that the image stabilization bracket is disposed fully around the focusing bracket, or may be that a part of the image stabilization bracket is disposed around the focusing bracket. In this implementation, the image stabilization bracket is frame-shaped. In this case, the image stabilization bracket is disposed around the focusing bracket.

It may be understood that in some solutions, the image stabilization bracket is located on the inner side of the focusing bracket. In this case, when the camera module needs to focus, the focusing bracket needs to drive the image stabilization bracket and the lens to move in the third direction. In this way, a mover formed by the focusing bracket, the image stabilization bracket, and the lens has a heavy weight. Consequently, a focusing drive assembly needs to increase a driving force by increasing a volume. Therefore, such an arrangement is not conducive to a light-weight and compact design of the motor. However, in this embodiment, the focusing bracket is disposed on the inner side of the image stabilization bracket. In this case, when the camera module needs to focus, the focusing bracket needs to drive the lens to move in the third direction. In this way, in this implementation, the image stabilization bracket can be omitted from a mover in a focusing process, that is, a mover formed by the focusing bracket and the lens has a light weight. This facilitates a compact design of the focusing drive assembly. The motor in this implementation can implement a light-weight and compact design.

It may be understood that in the solution in which the image stabilization bracket is located on the inner side of the focusing bracket, the image stabilization bracket requires at least two image stabilization drive assemblies to drive the image stabilization bracket to move on an X-Y plane. In this way, at least two sets of wires need to be arranged in the motor to provide a signal and supply power for the image stabilization drive assemblies, and the at least two sets of wires need to pass through the focusing bracket. Consequently, an energizing setting in this solution is complex, increasing difficulty in disposing the motor. However, in this embodiment, the focusing bracket is disposed on the inner side of the image stabilization bracket. Because the focusing bracket requires one set of focusing drive assemblies to push the focusing bracket to move in the third direction, the motor requires one set of wires to provide a signal and supply power for the focusing drive assembly, that is, one set of wires needs to pass through the image stabilization bracket. Therefore, an energizing solution of the solution in this implementation is simple, and can greatly reduce difficulty in disposing the motor.

A plane around which a conducting wire of the focusing coil is wound (namely, a winding plane) may be parallel to the third direction. In this case, the focusing coil is vertically arranged, so that the focusing coil can occupy a small area on a plane perpendicular to the optical axis. This facilitates a compact design of the motor. The focusing magnetic member may include two opposite polarity directions, and the two polarity directions are perpendicular to the third direction. In this case, the focusing magnetic member may be vertically arranged, to reduce a space occupied by the focusing magnetic member in the motor. This facilitates a compact design of the motor.

In a possible implementation, the motor further includes four suspension wires; and the suspension wire includes a first fixing end and a second fixing end, the first fixing ends of the four suspension wires are fixed at four corners of the base respectively, and the second fixing ends of the four suspension wires are connected to four positions of the image stabilization bracket respectively. In other words, it may also be considered that the suspension wires may be correspondingly fixed at four corners of the image stabilization bracket.

It may be understood that the suspension wires are disposed, so that an elastic connection between the base and the image stabilization bracket can be implemented. When the image stabilization bracket moves relative to the base, the four suspension wires are elastically deformed. In this case, a resultant force of restoring forces generated by the four suspension wires is directed opposite to a moving direction of the image stabilization bracket, to drive the image stabilization bracket to move in a reverse direction relative to the base, so that the image stabilization bracket moves back to an equilibrium position. This can improve motion linearity of the image stabilization bracket, and can also help maintain a center of the image stabilization bracket in an optical axis direction, thereby improving reliability and control precision of the motor.

In a possible implementation, the motor further includes a focusing drive chip, a plurality of wires, and a plurality of spring plates, the focusing drive chip is fixed to the image stabilization bracket, the plurality of wires are spaced apart in the image stabilization bracket, and the plurality of spring plates are spaced apart and fixed to the image stabilization bracket. Input ends of the plurality of wires are electrically connected to a plurality of ports of the focusing drive chip respectively, and first connection ends of the plurality of spring plates are electrically connected to output ends of the plurality of wires respectively. The base includes the bottom plate and four conductive members, and the conductive members are spaced apart and embedded in the bottom plate. Second connection ends of the plurality of spring plates are electrically connected to the four conductive members via the four suspension wires respectively. For example, the wires may include a first wire, a second wire, a third wire, and a fourth wire. The spring plates may include a first spring plate, a second spring plate, a third spring plate, and a fourth spring plate. The suspension wires may include a first suspension wire, a second suspension wire, a third suspension wire, and a fourth suspension wire. The four wires respectively serve as transmission channels between the four spring plates and four ports of the focusing drive chip. The four spring plates may respectively serve as transmission channels between the four wires and the four suspension wires, to implement "multiple purposes with one object" for the suspension wires. A circuit in the motor is simple, and a component utilization rate is high, which helps reduce costs and implement miniaturization of the motor.

In a possible implementation, the base is provided with mounting holes, and the four mounting holes are located at the four corners of the base. The conductive members are provided with through holes, the through holes of the four conductive members correspond to the four mounting holes respectively, the through holes are exposed from the mounting holes, and the first fixing ends of the four suspension wires extend into the through holes respectively. In an implementation, interference fit between the suspension wires, and the mounting holes and the through holes allows for stable connections between the suspension wires and the base and between the suspension wires and the conductive members. In addition, the base can limit the first fixing ends of the suspension wires, thereby ensuring reliability of electrical connections between the suspension wires and the conductive members.

In a possible implementation, the motor further includes a guide rod, and the guide rod is fixed to the image stabilization bracket or the guide rod is fixed to the focusing bracket. The focusing bracket is slidably connected to the image stabilization bracket via the guide rod, and the guide rod is made of a ceramic material. For example, there may be two guide rods, and the two guide rods may be the same or different in shape, size, material, and the like. The guide rod is made of a ceramic material, so that manufacturing costs of the guide rod can be effectively reduced, and a mass of the guide rod can be reduced. Therefore, the guide rod can be firmly fixed to the image stabilization bracket or the focusing bracket through adhesive bonding or the like. This also helps reduce manufacturing difficulty of the motor.

In a possible implementation, the motor further includes a first buffer member, and the first buffer member is connected to a side of the focusing bracket away from the base; the motor further includes a second buffer member, and the second buffer member is connected to a side of the focusing bracket facing the base; and/or the motor further includes a third buffer member, and the third buffer member is connected to an outer peripheral surface of the image stabilization bracket. It may be understood that the first buffer member, the second buffer member, and the third buffer member may all be made of a flexible material such as liquid silicone rubber or foam. The first buffer member and/or the second buffer member are/is disposed, to reduce an impact force between the focusing bracket and a motor housing or the base when the focusing bracket moves upward in the third direction, avoid damage or displacement of the lens caused by direct collision between the focusing bracket and the motor housing or the base, and improve reliability of the motor. The third buffer member is disposed, to reduce an impact force between the image stabilization bracket and the motor housing when the image stabilization bracket moves in the first direction or the second direction, avoid damage or displacement of the lens caused by direct collision between the image stabilization bracket and the motor housing, and improve reliability of the motor.

According to a second aspect, an implementation of this application further provides a camera module. The camera module includes a lens, an image sensor, or the motor according to any one of the foregoing implementations. The lens is mounted in the motor, the image sensor is located on a light output side of the lens, and the motor is fixed to the image sensor. The camera module in this implementation has high imaging quality and control precision.

In some possible implementations, the camera module further includes a variable aperture, and the variable aperture is located on a light input side of the lens. The variable aperture has an aperture hole, and a size of the aperture hole is automatically adjustable. Light may enter the lens through the aperture hole of the variable aperture. The variable aperture is configured to adjust an amount of light entering the lens, so that the camera module can maintain constant image shooting quality under a plurality of brightness conditions.

According to a third aspect, an implementation of this application further provides an electronic device. The electronic device includes a device housing and the foregoing camera module, and the camera module is disposed in the device housing. The camera module has good image shooting quality and control precision, which helps improve image shooting performance of the electronic device.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of a structure of an electronic device according to an embodiment of this application;
FIG. 2 is a diagram of a partial cross section of the electronic device shown in FIG. 1 that is cut along A-A in some embodiments;
FIG. 3 is a diagram of a structure of a camera module shown in FIG. 1 in some embodiments;
FIG. 4 is a diagram of a partial exploded structure of the camera module shown in FIG. 3 in some embodiments;
FIG. 5 is a diagram of a partial cross section of the camera module shown in FIG. 3 that is cut along B-B in some embodiments;
FIG. 6 is a diagram of a partial exploded structure of a motor shown in FIG. 4 in some embodiments;
FIG. 7 is a diagram of a structure of a base shown in FIG. 6 in some embodiments;
FIG. 8 is a diagram of a partial exploded structure of the base shown in FIG. 7 in some embodiments;
FIG. 9 is a diagram of a partial cross section of the base shown in FIG. 7 that is cut along C-C in some embodiments;
FIG. 10 is a diagram of a partial exploded structure of the motor shown in FIG. 6 in some embodiments;
FIG. 11 is a diagram 1 of a partial structure of the motor shown in FIG. 10;
FIG. 12 is a diagram of a partial exploded structure of an image stabilization bracket shown in FIG. 6 in some embodiments;
FIG. 13 is a diagram of a structure of the image stabilization bracket shown in FIG. 12 from another perspective;
FIG. 14 is a diagram 2 of a partial structure of the motor shown in FIG. 6 in some embodiments;
FIG. 15 is a diagram of a partial exploded structure of the motor shown in FIG. 6 in some embodiments;
FIG. 16 is a diagram 3 of a partial structure of the motor shown in FIG. 6 in some embodiments;
FIG. 17 is a diagram of a partial cross section of the motor shown in FIG. 16 that is cut along D-D in some embodiments;
FIG. 18 is a diagram of a partial cross section of the motor shown in FIG. 16 that is cut along E-E in some embodiments;
FIG. 19 is a diagram of a partial cross section of the motor shown in FIG. 16 that is cut along F-F in some embodiments;
FIG. 20a is a diagram of an operating status of a compensation mechanism according to an embodiment of this application;
FIG. 20b is a diagram of another operating status of a compensation mechanism according to an embodiment of this application;
FIG. 21a is a diagram of another operating status of a compensation mechanism according to an embodiment of this application;
FIG. 21b is a diagram of another operating status of a compensation mechanism according to an embodiment of this application;
FIG. 22a is a diagram of an operating status of a compensation mechanism according to an embodiment of this application;
FIG. 22b is a diagram of another operating status of a compensation mechanism according to an embodiment of this application;
FIG. 23a is a diagram of an operating status of a compensation mechanism according to an embodiment of this application;
FIG. 23b is a diagram of another operating status of a compensation mechanism according to an embodiment of this application;
FIG. 24 is a diagram of an assembled structure of a circuit board assembly and a focusing coil shown in FIG. 6;
FIG. 25 is a diagram 4 of a partial structure of the motor shown in FIG. 6 in some embodiments;
FIG. 26 is a diagram of a partial exploded structure of a focusing bracket shown in FIG. 6 from another perspective;
FIG. 27 is a diagram 5 of a partial structure of the motor shown in FIG. 6 in some embodiments;
FIG. 28 is a diagram of a partial exploded structure of the motor shown in FIG. 6 in some embodiments;
FIG. 29 is a diagram 6 of a partial structure of the motor shown in FIG. 6 in some embodiments;
FIG. 30 is a diagram of a partial cross section of the motor shown in FIG. 29 that is cut along G-G in some embodiments;
FIG. 31 is a diagram of a partial exploded structure of the motor shown in FIG. 6 in some embodiments;
FIG. 32 is a diagram 7 of a partial structure of the motor shown in FIG. 31 in some embodiments;
FIG. 33 is a diagram of a structure of a motor shown in FIG. 4 from another perspective;
FIG. 34 is a diagram of a partial exploded structure of the motor shown in FIG. 33 in some embodiments;
FIG. 35 is a diagram of a partial exploded structure of the motor shown in FIG. 34 in some embodiments;
FIG. 36 is a diagram of a partial structure of an embodiment of a line for electrically connecting a focusing drive chip to an external structure according to an embodiment of this application;
FIG. 37 is a diagram of a partial structure of an embodiment of a line for electrically connecting a motor shown in FIG. 4 to an external structure;
FIG. 38 is a diagram of a partial structure of another motor according to an embodiment of this application; and
FIG. 39 is a diagram of a partial structure of another motor according to an embodiment of this application.

### DESCRIPTION OF EMBODIMENTS

The following describes embodiments of this application with reference to the accompanying drawings in embodiments of this application.

In the descriptions of embodiments of this application, it should be noted that terms "mounting" and "connection" should be understood in a broad sense unless there is a clear stipulation and limitation. For example, "connection" may be a detachable connection, a non-detachable connection, a direct connection, or an indirect connection through an intermediate medium. "Fixed connection" means that two parts are connected to each other and a relative position relationship remains unchanged after the two parts are connected. "Slidable connection" means that two parts are connected to each other and can slide relative to each other after the two parts are connected to each other. Orientation terms mentioned in embodiments of this application, for example, "up", "down", "inside", and "outside", are merely directions with reference to the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application.

"A plurality of" means at least two. "A and/or B" includes three solutions, which are specifically a solution A, a solution B, and a solution AB. "Electrical connection" means that an electrical signal may be conducted between each other. In addition, obtaining an integral structure of two components through an integrally formed process means that, in a process of forming one of the two components, the component is connected to the other component, and the two components do not need to be connected through reprocessing (for example, bonding, welding, snap fitting, or screwing).

In embodiments of this application, the terms "first", "second", "third", and "fourth" are merely intended for a purpose of description, and shall not be understood as an indication or implication of relative importance or an implicit indication of a quantity of indicated technical features. Therefore, a feature limited by "first", "second", "third", or "fourth" may explicitly or implicitly include one or more features.

In addition, in embodiments of this application, a mathematical concept such as parallel, vertical, and the like is mentioned. These limitations are all for the current process level, but not for an absolute strict definition in the mathematical sense. A small deviation is allowed, which can be approximately parallel or vertical. For example, A being parallel to B means A being parallel or roughly parallel to B, and an included angle of 0 degrees to 10 degrees between A and B being allowed. For example, A being perpendicular to B means A being perpendicular or roughly perpendicular to B, and an included angle of 80 degrees to 100 degrees between A and B being allowed.

It can be understood that specific implementations described herein are merely intended to explain a related invention, but not to limit the invention. In addition, it should be noted that, for ease of description, only a part related to the invention is shown in the accompanying drawings.

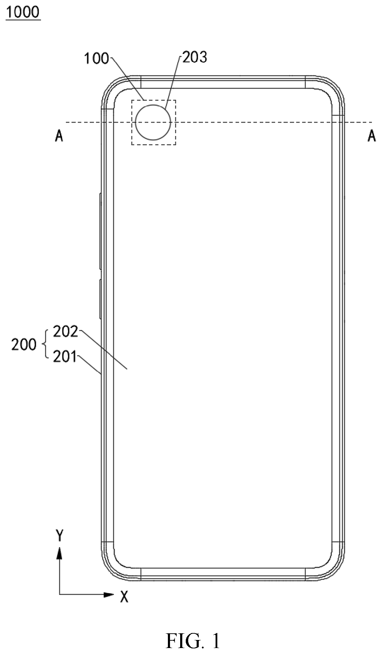

FIG. 1 is a diagram of a structure of an electronic device 1000 according to an embodiment of this application.

As shown in FIG. 1, in some embodiments, the electronic device 1000 may be a device with a camera function, for example, a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, an example in which the electronic device 1000 is a mobile phone is used for description.

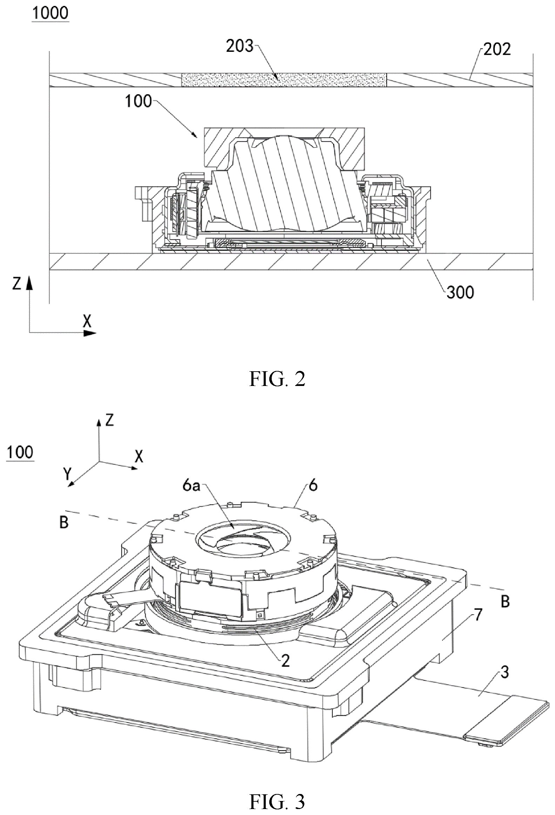

FIG. 2 is a diagram of a partial cross section of the electronic device 1000 shown in FIG. 1 that is cut along A-A in some embodiments.

As shown in FIG. 1 and FIG. 2, in some embodiments, the electronic device 1000 may include a camera module 100, a device housing 200, and a screen 300. The camera module 100 may be a rear-facing camera module 100, or may be a front-facing camera module 100. It should be noted that FIG. 1 and the following related accompanying drawings only schematically show some components included in the electronic device 1000. Actual shapes, actual sizes, actual positions, and actual structures of these components are not limited by FIG. 1 and the following accompanying drawings. In addition, when the electronic device 1000 is a device in another form, the electronic device 1000 may alternatively not include the screen 300.

The device housing 200 may include a side frame 201 and a rear cover 202. The rear cover 202 is fixed to the side frame 201. For example, the rear cover 202 may be fixed to the side frame 201 through adhesive bonding, snap fitting, or the like. The rear cover 202 and the side frame 201 may alternatively be an integrally formed structure, that is, the rear cover 202 and the side frame 201 are an overall structure.

In some embodiments, the screen 300 may be located on a side of the side frame 201 away from the rear cover 202. In this case, the screen 300 and the rear cover 202 may be respectively located on two sides of the side frame 201. The screen 300, the side frame 201, and the rear cover 202 jointly enclose an interior of the electronic device 1000. The interior of the electronic device 1000 may be used for accommodating components of the electronic device 1000, for example, a battery, a receiver, or a microphone. The screen 300 may be a flat screen or a curved screen.

For example, the camera module 100 may be located in the electronic device 1000. The camera module 100 may be located on a side, facing the rear cover 202, of the screen 300. The rear cover 202 may be provided with a light-transmitting part 203. A shape of the light-transmitting part 203 is not limited to a circle shown in FIG. 1. The interior of the electronic device 1000 and an exterior of the electronic device 1000 communicate through the light-transmitting part 203. Light outside the electronic device 1000 may enter the interior of the electronic device 1000 via the light-transmitting part 203. The camera module 100 may capture light that enters the electronic device 1000.

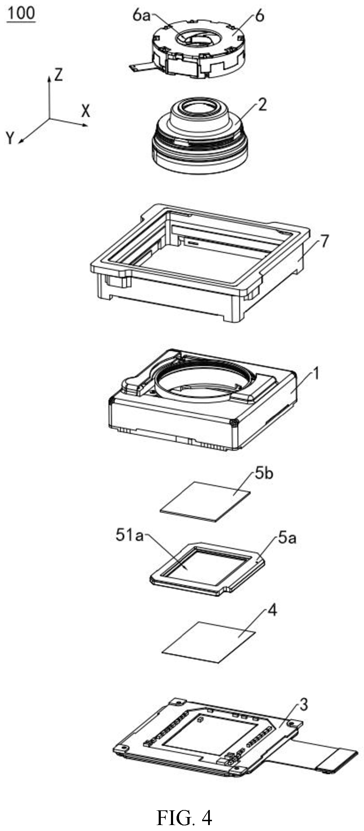

FIG. 3 is a diagram of a structure of the camera module 100 shown in FIG. 1 in some embodiments. FIG. 4 is a diagram of a partial exploded structure of the camera module 100 shown in FIG. 3 in some embodiments.

As shown in FIG. 3 and FIG. 4, the camera module 100 includes a motor 1, a lens 2, a module circuit board 3, an image sensor 4, an optical filter holder 5a, an optical filter 5b, a variable aperture 6, and a module housing 7. The image sensor 4 may also be referred to as a photosensitive chip or a photosensitive element. The image sensor 4 is configured to: capture ambient light, and convert image information carried in the ambient light into an electrical signal.

It may be understood that the camera module 100 may further include fewer or more structures. For example, the camera module 100 may include fewer structures. For example, the camera module 100 may not include the optical filter holder 5a, the optical filter 5b, the variable aperture 6, and/or the module housing 7.

It may be understood that for ease of description, in the following descriptions, the camera module 100 is defined to have a first direction Y, a second direction X, and a third direction Z. The first direction Y may be a width direction of the camera module 100. The second direction X may be a length direction of the camera module 100, and the second direction X is perpendicular to the first direction Y. The third direction Z may be a height direction of the camera module 100, and the third direction Z is perpendicular to the first direction Y and the second direction X. In another implementation, a coordinate system of the camera module 100 may be flexibly set based on a specific actual requirement.

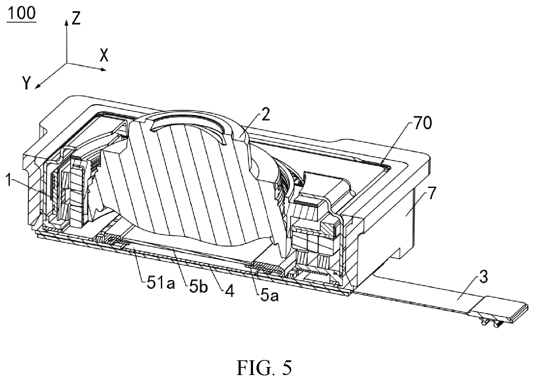

FIG. 5 is a diagram of a partial cross section of the camera module 100 shown in FIG. 3 that is cut along B-B in some embodiments.

As shown in FIG. 5, the module housing 7 is fixed to the module circuit board 3, and the module housing 7 and the module circuit board 3 jointly enclose an accommodation space 70. The motor 1, the lens 2, the image sensor 4, the optical filter holder 5a, the optical filter 5b, and the like may all be located in the accommodation space 70. The module housing 7 covers at least a part of the motor 1, and a part of the lens 2 may extend out of the module housing 7 through an opening of the module housing 7. The module housing 7 may be configured to protect a mechanical part in the camera module 100.

As shown in FIG. 5, the image sensor 4 may be disposed on the module circuit board 3, and is electrically connected to the module circuit board 3. In this case, the image sensor 4 and the module circuit board 3 may perform signal transmission with each other.

For example, the optical filter holder 5a is fixed to the module circuit board 3. The optical filter holder 5a and the image sensor 4 are located on a same side of the module circuit board 3. The optical filter holder 5a is provided with a light inlet 51a. The optical filter 5b is fixed to the optical filter holder 5a. The optical filter 5b may be located in the light inlet 51a. The optical filter 5b is alternatively disposed opposite to the image sensor 4. The optical filter 5b may be configured to filter out infrared light, blue light, or the like from light before the light enters the image sensor 4, to ensure that the image sensor 4 has better imaging quality.

As shown in FIG. 5, the motor 1 may be fixed to the module circuit board 3. The motor 1 and the image sensor 4 are located on a same side of the module circuit board 3. The lens 2 is mounted on the motor 1. The image sensor 4 is located on a light output side of the lens 2. It may be understood that in the third direction Z, the image sensor 4, the optical filter 5b, and the lens 2 are sequentially arranged. In this case, the image sensor 4 is located on the light output side of the lens 2. The optical filter 5b is located between the lens 2 and the image sensor 4.

It may be understood that the lens 2 may be configured to capture the ambient light. An optical axis direction of the lens 2 may be parallel to the third direction Z of the camera module 100. The optical axis direction of the lens 2 and an optical axis direction of the camera module 100 are a same direction.

It may be understood that, compared with a solution in which the motor 1 is fixed to the optical filter holder 5a, in this embodiment, the motor 1 is fixed to the module circuit board 3, so that the motor 1 and the optical filter holder 5a are not stacked in the third direction Z, in other words, the motor 1 and the optical filter holder 5a may be staggered on an X-Y plane. This significantly reduces a height of the camera module 100.

It may be understood that the motor 1 may be a focusing motor 1. In this way, the motor 1 may control the lens 2 to move in the third direction Z, to implement auto focus (auto focus, AF). The motor 1 may alternatively be an image stabilization motor 1. In this way, the motor 1 may control the lens 2 to move along a plane (namely, the X-Y plane) perpendicular to the third direction Z. When the camera module 100 captures ambient light, if the electronic device 1000 jitters on the X-Y plane due to an external force, the motor 1 may be used to control movement of the lens 2 on the X-Y plane, to compensate for the jitter displacement generated by the lens 2 on the X-Y plane, thereby avoiding or reducing a position offset of the lens 2 caused by the jitter. In other words, the camera module 100 in this application may control movement of the lens 2 on the X-Y plane through the motor 1, to achieve optical image stabilization (optical image stabilization, OIS) for the camera module 100, and improve imaging quality of the camera module 100. The motor 1 may alternatively be a motor 1 that integrates image stabilization and focusing. In this way, the motor 1 can implement auto focus by controlling the lens 2, and can also implement optical image stabilization by controlling the lens 2. In this implementation, an example in which the motor 1 is a motor 1 that integrates image stabilization and focusing is used for description.

As shown in FIG. 3 and FIG. 4, the variable aperture 6 may be located on a light input side of the lens 2. In the third direction Z, the image sensor 4, the optical filter 5b, the lens 2, and the variable aperture 6 are sequentially arranged.

It may be understood that the variable aperture 6 has an aperture hole 6a, and a size of the aperture hole 6a may be automatically adjusted. Light may enter the lens 2 through the aperture hole 6a of the variable aperture 6. The variable aperture 6 is configured to adjust an amount of light entering the lens, so that the camera module 100 can maintain constant image shooting quality under a plurality of brightness conditions.

The foregoing briefly describes the structure of the camera module 100 with reference to related accompanying drawings. The following specifically describes a structure of the motor 1 with reference to related accompanying drawings.

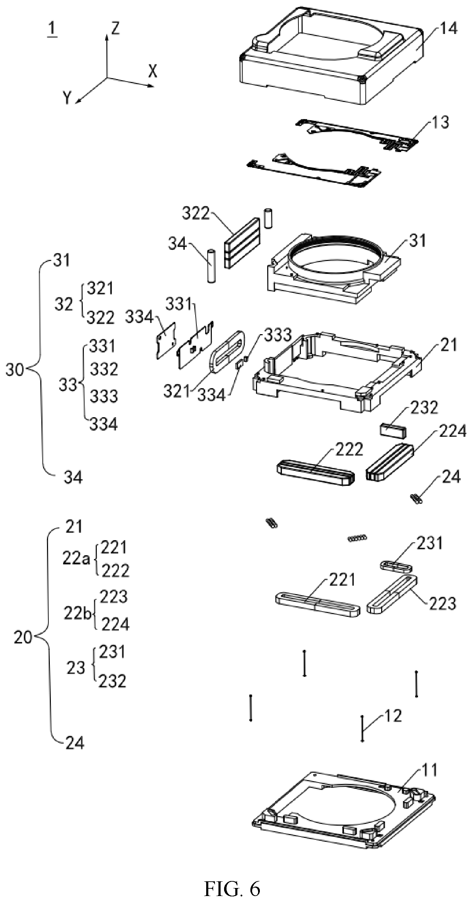

FIG. 6 is a diagram of a partial exploded structure of the motor 1 shown in FIG. 4 in some embodiments.

As shown in FIG. 6, the motor 1 includes a base 11, suspension wires 12, spring plates 13, a motor housing 14, an image stabilization drive module 20, and a focusing drive module 30.

For example, the image stabilization drive module 20 may include an image stabilization bracket 21, a first image stabilization drive mechanism 22a, a second image stabilization drive mechanism 22b, a compensation mechanism 23, and ball groups 24. The first image stabilization drive mechanism 22a includes a first image stabilization coil 221 and a first image stabilization magnetic member 222, and the second image stabilization drive mechanism 22b includes a second image stabilization coil 223 and a second image stabilization magnetic member 224. The compensation mechanism 23 includes a compensation coil 231 and a compensation magnetic member 232.

For example, the focusing drive module 30 may include a focusing bracket 31, a focusing drive mechanism 32, a circuit board assembly 33, and a guide rod 34. In an implementation, the focusing drive mechanism 32 may include a focusing coil 321 and a focusing magnetic member 322. The circuit board assembly 33 may include a focusing circuit board 331, a focusing drive chip 332, a focusing sensor 333, and a focusing stiffener 334. In another implementation, the circuit board assembly 33 may alternatively not include the focusing sensor 333 and/or the focusing stiffener 334.

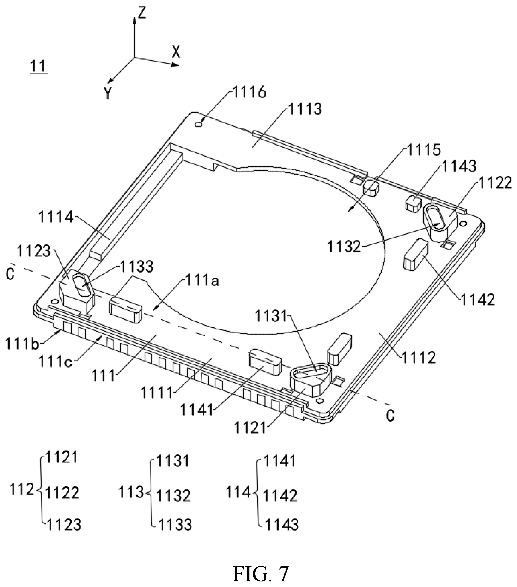

FIG. 7 is a diagram of a structure of the base 11 shown in FIG. 6 in some embodiments.

As shown in FIG. 7, the base 11 may include a bottom plate 111, the bottom plate 111 may be roughly square, and the bottom plate 111 may include a first side region 1111, a second side region 1112, a third side region 1113, and a fourth side region 1114 that are sequentially connected from end to end. The first side region 1111 and the third side region 1113 may be disposed opposite to each other, and the fourth side region 1114 and the second side region 1112 may be disposed opposite to each other. For example, the first side region 1111 and the second side region 1112 may be disposed perpendicular to each other. The third side region 1113 may be parallel to the first side region 1111. The fourth side region 1114 may be parallel to the second side region 1112.

For example, the bottom plate 111 may have a first surface 111a, a second surface 111b, and a third surface 111c. The first surface 111a and the second surface 111b are opposite to each other in the third direction Z. The third surface 111c is connected between the first surface 111a and the second surface 111b. A first through hole 1115 may be provided in the bottom plate 111, and the first through hole 1115 may extend through the first surface 111a and the second surface 111b. The first side region 1111, the second side region 1112, the third side region 1113, and the fourth side region 1114 enclose the first through hole 1115.

For example, a plurality of mounting holes 1116 may be further provided on the bottom plate 111, there are four mounting holes 1116, the four mounting holes 1116 are respectively located at four corners of the bottom plate 111, and the mounting holes 1116 extend through the first surface 111a and the second surface 111b of the bottom plate 111.

For example, a plurality of mounting blocks 112 may be disposed on the bottom plate 111. The plurality of mounting blocks 112 are located in a space enclosed by the four mounting holes 1116. The plurality of mounting blocks 112 may include a first mounting block 1121, a second mounting block 1122, and a third mounting block 1123. The first mounting block 1121 protrudes from the bottom plate 111 and is located at a junction enclosed by the first side region 1111 and the second side region 1112. The second mounting block 1122 protrudes from the bottom plate 111 and is located at a junction enclosed by the second side region 1112 and the third side region 1113. The third mounting block 1123 protrudes from the bottom plate 111 and is located at a junction enclosed by the fourth side region 1114 and the first side region 1111. In some embodiments, a fourth mounting block may be further disposed on the bottom plate 111. The fourth mounting block may protrude from the bottom plate 111 and is located at a junction enclosed by the third side region 1113 and the fourth side region 1114. Alternatively, the base 11 may include the first mounting block 1121, the second mounting block 1122, and the fourth mounting block, but does not include the third mounting block 1123. This is not limited in this application.

For example, the mounting block 112 may be provided with a groove 113. The groove 113 may be formed by being recessed inwardly into the mounting block 112 from a side of the mounting block 112 away from the first surface 111a, and an extension direction of the groove 113 is parallel to the X-Y plane. For example, a first groove 1131, a second groove 1132, and a third groove 1133 may be provided on the first mounting block 1121, the second mounting block 1122, and the third mounting block 1123 respectively, to accommodate and mount other mechanical parts.

For example, the bottom plate 111 may be further provided with a stopper group 114. The stopper group 114 may include two stoppers spaced apart, and the stoppers protrude from the bottom plate 111. There may be three stopper groups 114. The three stopper groups 114 may include a first stopper group 1141, a second stopper group 1142, and a third stopper group 1143. The first stopper group 1141 may be located in the first side region 1111, two stoppers in the first stopper group 1141 may be spaced apart in the second direction X, and the first stopper group 1141 is located between the first mounting block 1121 and the third mounting block 1123. The second stopper group 1142 may be located in the second side region 1112, two stoppers in the second stopper group 1142 may be spaced apart in the first direction Y, and the second stopper group 1142 is located between the first mounting block 1121 and the second mounting block 1122. The third stopper group 1143 may be located in the third side region 1113, two stoppers in the third stopper group 1143 may be spaced apart in the second direction X, and the third stopper group 1143 is disposed closer to the second mounting block 1122 than the fourth side region 1114. Stoppers in the stopper groups 114 may have the same or completely different spacings, sizes, shapes, and the like; and a quantity of stoppers in a stopper group may be the same as or different from that in another stopper group. This is not limited in this application. In another embodiment, the third stopper group 1143 may be disposed closer to the fourth side region 1114 than the second side region 1112.

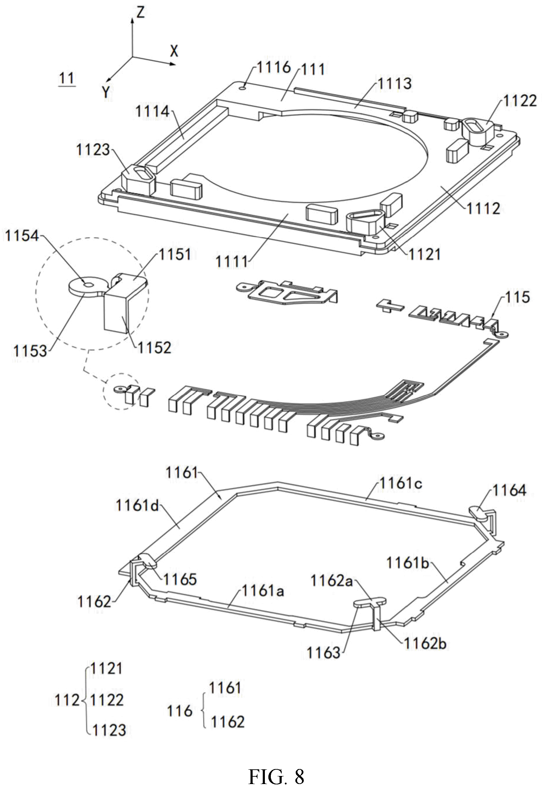

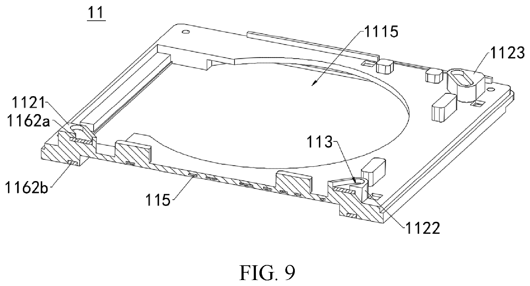

FIG. 8 is a diagram of a partial exploded structure of the base 11 shown in FIG. 7 in some embodiments. FIG. 9 is a diagram of a partial cross section of the base 11 shown in FIG. 7 that is cut along C-C in some embodiments.

As shown in FIG. 8 and FIG. 9, for example, the base 11 may further include a plurality of conductive members 115. The conductive members 115 may include a first conductive portion 1151, a second conductive portion 1152, and an epitaxial portion 1153. An extension direction of the first conductive portion 1151 may be parallel to the X-Y plane. The second conductive portion 1152 may be bent and connected to the first conductive portion 1151 and extend in the third direction Z. The epitaxial portion 1153 may also be bent and connected to the first conductive portion 1151, and is located on the same side as the first conductive portion 1151 and the second conductive portion 1152. For example, the epitaxial portion 1153 may be provided with a through hole 1154, and the through hole 1154 may extend through the epitaxial portion 1153 in the third direction Z. For example, the epitaxial portion 1153 may be annular.

In some embodiments, the plurality of conductive members 115 may be spaced apart in the bottom plate 111. For example, there may be four conductive members 115. Four epitaxial portions 1153 are disposed corresponding to the four mounting holes 1116 respectively. The mounting holes 1116 and the through hole 1154 at least partially overlap, and the through hole 1154 may be exposed from the mounting holes 1116.

The epitaxial portion 1153 and the first conductive portion 1151 may be configured to electrically connect another mechanical part in the motor 1 to the second conductive portion 1152, and an end part of the second conductive portion 1152 may be further exposed from the second surface 111b and/or the third surface 111c, and is configured to electrically connect the module circuit board 3 (as shown in FIG. 5). In other words, the conductive member 115 may serve as an electrical connection transmission channel between the mechanical part in the motor 1 and the module circuit board 3. In some embodiments, a quantity of conductive members 115 may alternatively be seven, fifteen, twenty, or the like. The plurality of conductive members 115 may be arranged in the first side region 1111, the second side region 1112, and the third side region 1113. The conductive member 115 may further include the first conductive portion 1151 and the second conductive portion 1152, but does not include the epitaxial portion 1153. This is not limited in this application.

For example, the base 11 may further include a first metal member 116. The first metal member 116 may include a reinforcement portion 1161 and a support portion 1162. The reinforcement portion 1161 may be frame-shaped. The reinforcement portion 1161 may include a first edge 1161a, a second edge 1161b, a third edge 1161c, and a fourth edge 1161d. There may be three support portions 1162. The three support portions 1162 include a first support portion 1163, a second support portion 1164, and a third support portion 1165. The first support portion 1163 is located at a junction between the first edge 1161a and the second edge 1161b. The second support portion 1164 is located at a junction between the second edge 1161b and the third edge 1161c. The third support portion 1165 is located at a junction between the fourth edge 1161d and the first edge 1161a. In some embodiments, the reinforcement portion 1161 and the support portion 1162 may be an integrally formed structure.

For example, the support portion 1162 may include a first part 1162a and a second part 1162b. The second part 1162b is connected between the first part 1162a and the reinforcement portion 1161. The second part 1162b is vertically disposed relative to the reinforcement portion 1161. The first part 1162a is bent relative to the second part 1162b, and is spaced away from the reinforcement portion 1161.

In some embodiments, the first metal member 116 is mounted in the bottom plate 111, and the first metal member 116 can enhance overall strength of the base 11, to avoid damage to the base 11, thereby improving reliability of the base 11. For example, the first metal member 116 may be made of a steel sheet. For example, the first edge 1161a may be embedded in the first side region 1111, the second edge 1161b may be embedded in the second side region 1112, the third edge 1161c may be embedded in the third side region 1113, and the fourth edge 1161d may be correspondingly embedded in the fourth side region 1114. The first support portion 1163 may be embedded in the first mounting block 1121, the second support portion 1164 may be embedded in the second mounting block 1122, and the third support portion 1165 may be embedded in the third mounting block 1123. For example, the reinforcement portion 1161 may be embedded in the bottom plate 111, and is located on a side of the support portion 1162 away from the groove 113. The second part 1162b may be embedded in the corresponding mounting block 112, and the first part 1162a may be exposed from the corresponding groove 113. In another embodiment, the reinforcement portion 1161 may be fixed to a side of the second surface 111b away from the first surface 111a through adhesive bonding. This is not limited in this application.

For example, the first conductive portion 1151 may be located in a region between the first part 1162a and the reinforcement portion 1161, and is spaced from both the support portion 1162 and the reinforcement portion 1161. The second conductive portion 1152 is also spaced from an edge of the reinforcement portion 1161, and is located on a side of the reinforcement portion 1161 away from the first through hole 1115. In this case, the conductive member 115 and the first metal member 116 may form a three-layer structure. For example, the first layer is the first part 1162a, which serves to enhance structural strength of the groove 113, the second layer is the first conductive portion 1151, which serves as an electrical transmission channel in the base 11, and the third layer is the reinforcement portion 1161, which serves to enhance structural strength of the bottom plate 111. Disposing the first conductive portion 1151 in the region between the first part 1162a and the reinforcement portion 1161 can effectively use a space in the bottom plate 111 and help implement miniaturization of the motor 1. In addition, spacing the conductive member 115 apart from the first metal member 116 can avoid interference caused by the first metal member 116 to an electrical transmission process of the conductive member 115 if the first metal member 116 were in contact with the conductive member 115, thereby ensuring reliability of the motor 1 when implementing miniaturization.

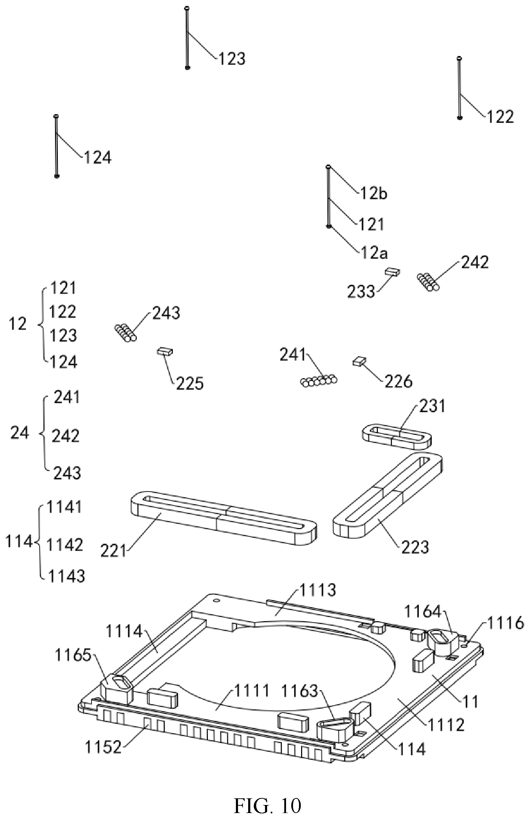

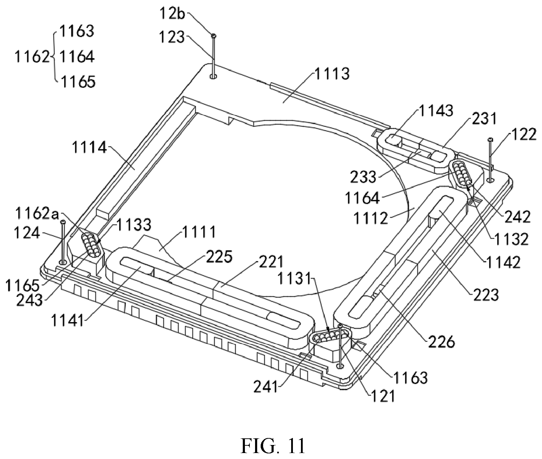

FIG. 10 is a diagram of a partial exploded structure of the motor 1 shown in FIG. 6 in some embodiments. FIG. 11 is a diagram 1 of a partial structure of the motor 1 shown in FIG. 10.

As shown in FIG. 10 and FIG. 11, in some embodiments, the first image stabilization coil 221 is mounted in the first side region 1111, for being fixed to the base 11. The second image stabilization coil 223 is mounted in the second side region 1112, for being fixed to the base 11. The compensation coil 231 is mounted in the third side region 1113, for being fixed to the base 11.

In some embodiments, the first image stabilization coil 221 may be disposed around the first stopper group 1141, the second image stabilization coil 223 may be disposed around the second stopper group 1142, the compensation coil 231 may be disposed around the third stopper group 1143, and the stopper group 114 may be configured to limit the first image stabilization coil 221, the second image stabilization coil 223, and the compensation coil 231.

For example, the first image stabilization drive mechanism 22a may further include a first position sensor 225. The first position sensor 225 is fixed to the first side region 1111, and is located on an inner side of the first image stabilization coil 221. The first position sensor 225 is configured to implement position detection, and the first position sensor 225 may be a Hall (hall) effect sensor or a tunnel magneto-resistance (tunnel magneto-resistance, TMR) sensor.

For example, the second image stabilization drive mechanism 22b may further include a second position sensor 226. The second position sensor 226 is fixed to the second side region 1112, and is located on an inner side of the second image stabilization coil 223. The second position sensor 226 is configured to implement position detection, and the second position sensor 226 may be a Hall (hall) effect sensor or a tunnel magneto-resistance (tunnel magneto-resistance, TMR) sensor.

For example, the compensation mechanism 23 may further include a third position sensor 233. The third position sensor 233 is fixed to the third side region 1113, and is located on an inner side of the compensation coil 231. The third position sensor 233 is configured to implement position detection, and the third position sensor 233 may be a Hall (hall) effect sensor or a tunnel magneto-resistance (tunnel magneto-resistance, TMR) sensor.

As shown in FIG. 10 and FIG. 11, in some embodiments, the four suspension wires 12 may be mounted in the four mounting holes 1116 respectively. For example, the four suspension wires 12 may include a first suspension wire 121, a second suspension wire 122, a third suspension wire 123, and a fourth suspension wire 124. The four suspension wires 12 may be the same or different in shape and size. This is not limited in this application.

For example, the first suspension wire 121 may include a first fixing end 12a and a second fixing end 12b that are disposed opposite to each other. The first suspension wire 121 may be vertically disposed relative to the base 11, and the first fixing end 12a may extend into the through hole 1154 (as shown in FIG. 8) and the mounting hole 1116, and be snapped into the mounting hole 1116, to implement a fixed connection between the first suspension wire 121 and the base 11. For example, the first fixing end 12a may be fixed in the mounting hole 1116 through adhesive bonding, welding, or the like.

It may be understood that, for a manner of connecting the second suspension wire 122, the third suspension wire 123, and the fourth suspension wire 124 to the base 11, refer to a manner of connecting the first suspension wire 121 to the base 11. This is not specifically limited in this application.

For example, the first fixing end 12a of the first suspension wire 121 may be located at a junction between the first side region 1111 and the second side region 1112, a first fixing end 12a of the second suspension wire 122 may be located at a junction between the second side region 1112 and the third side region 1113, a first fixing end 12a of the third suspension wire 123 may be located at a junction between the third side region 1113 and the fourth side region 1114, and a first fixing end 12a of the fourth suspension wire 124 may be located at a junction between the fourth side region 1114 and the first side region 1111.

For example, the ball groups 24 may include a first ball group 241, a second ball group 242, and a third ball group 243. Each ball group 24 may include a plurality of balls, and a quantity of balls may be 12, 16, 20, or the like. This is not limited in this application. Balls in each ball group 24 may be the same as or different in shape and size; and a quantity of balls in a ball group may be the same as or different from that in another ball group. In this embodiment of this application, an example in which all balls in the ball group 24 have a same shape, size, and the like, and quantities of balls in the first ball group 241, the second ball group 242, and the third ball group 243 are the same is used for description. In another embodiment, the ball groups 24 may further include a fourth ball group or the like, or there may be one ball in the ball group 24. This is not limited in this application.

For example, the first ball group 241 may be disposed in the first groove 1131. Balls in the first ball group 241 may roll in the first groove 1131. A part of the balls in the first ball group 241 may be located in the first groove 1131, and a part of the balls are located outside the first groove 1131.

For example, the second ball group 242 may be disposed in the second groove 1132. Balls in the second ball group 242 may roll in the second groove 1132. A part of the balls in the second ball group 242 may be located in the second groove 1132, and a part of the balls are located outside the second groove 1132.

For example, the third ball group 243 may be disposed in the third groove 1133. Balls in the third ball group 243 may roll in the third groove 1133. A part of the balls in the third ball group 243 may be located in the third groove 1133, and a part of the balls are located outside the third groove 1133.

For example, the ball group 24 may be located in the corresponding groove 113, be in contact with the first part 1162a of the corresponding support portion 1162, and be rollably connected to the first part 1162a. For example, alternatively, the first ball group 241 may be located in the first groove 1131, be in contact with the first part 1162a of the first support portion 1163, and be rollably connected to the first part 1162a of the first support portion 1163. The second ball group 242 may be located in the second groove 1132, be in contact with the first part 1162a of the second support portion 1164, and be rollably connected to the first part 1162a of the second support portion 1164. The third ball group 243 may be located in the third groove 1133, be in contact with the first part 1162a of the third support portion 1165, and be rollably connected to the first part 1162a of the third support portion 1165. The first support portion 1163, the second support portion 1164, and the third support portion 1165 are all made of steel sheets. The first support portion 1163, the second support portion 1164, and the third support portion 1165 are embedded in the first mounting block 1121, the second mounting block 1122, and the third mounting block 1123 respectively, and can be in contact with the corresponding ball group 24, so that the support portion 1162 can enhance structural strength of the mounting block 112, prevent the mounting block 112 from being deformed by pressure, and reduce friction resistance in a rolling process of the ball group 24.

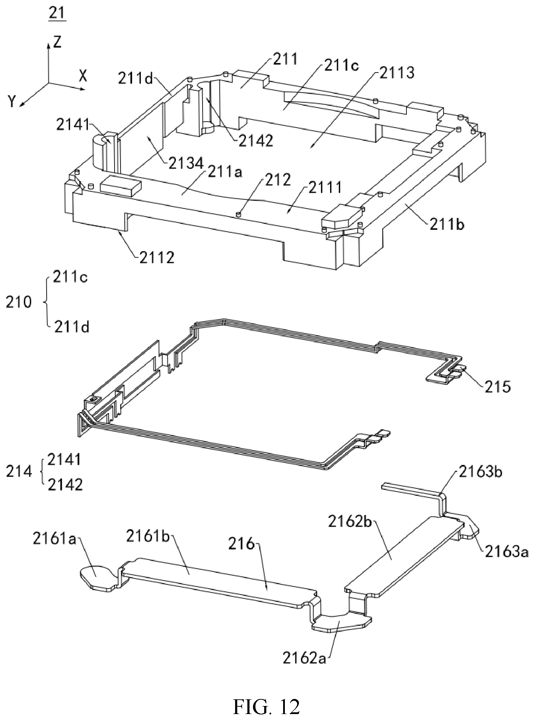

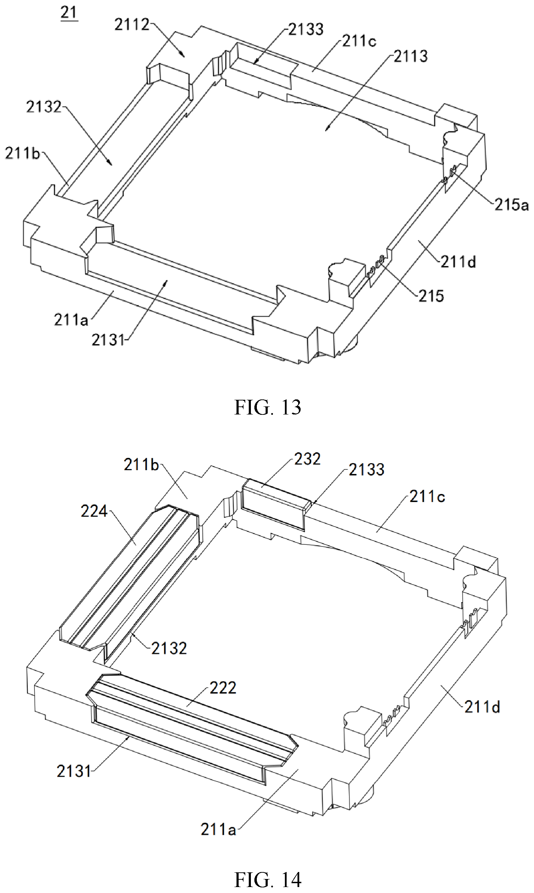

FIG. 12 is a diagram of a partial exploded structure of the image stabilization bracket 21 shown in FIG. 6 in some embodiments. FIG. 13 is a diagram of a structure of the image stabilization bracket 21 shown in FIG. 12 from another perspective.

As shown in FIG. 12 and FIG. 13, for example, the image stabilization bracket 21 may include an image stabilization bracket body 211. The image stabilization bracket body 211 may be roughly annular. The image stabilization bracket body 211 may have a first side portion 211a, a second side portion 211b, and a connection section 210 that are sequentially connected. The connection section 210 may include a third side portion 211c and a fourth side portion 211d. The third side portion 211c may be connected between the second side portion 211b and the fourth side portion 211d. The first side portion 211a and the second side portion 211b are disposed at an included angle. The first side portion 211a and the third side portion 211c are disposed opposite to each other. The fourth side portion 211d and the second side portion 211b are disposed opposite to each other. For example, the first side portion 211a and the second side portion 211b may be disposed perpendicular to each other. The third side portion 211c may be parallel to the first side portion 211a. The fourth side portion 211d may be parallel to the second side portion 211b.

For example, the image stabilization bracket 21 may have a top surface 2111 and a bottom surface 2112 that are opposite to each other in the third direction Z. A second through hole 2113 may be provided in the image stabilization bracket 21, the second through hole 2113 may extend through the top surface 2111 and the bottom surface 2112, and the second through hole 2113 is located between the first side portion 211a and the third side portion 211c, and between the second side portion 211b and the fourth side portion 211d. In other words, the first side portion 211a, the second side portion 211b, the third side portion 211c, and the fourth side portion 211d are disposed around the second through hole 2113.

For example, the image stabilization bracket 21 may be provided with a plurality of fixing posts 212, and the fixing posts 212 may be disposed on the top surface 2111 and protrude from the top surface 2111. For example, the plurality of fixing posts 212 may be distributed on the first side portion 211a, the second side portion 211b, the third side portion 211c, and the fourth side portion 211d.

The image stabilization bracket 21 may be provided with a first mounting groove 2131, a second mounting groove 2132, and a third mounting groove 2133. The first mounting groove 2131 is located on the first side portion 211a, the second mounting groove 2132 is located on the second side portion 211b, and the third mounting groove 2133 is located on the third side portion 211c. In addition, the first mounting groove 2131, the second mounting groove 2132, and the third mounting groove 2133 are provided on a same side of the image stabilization bracket 21. For example, the first mounting groove 2131 may be formed by indenting from the bottom surface 2112 toward an interior of the first side portion 211a. Sizes of the first mounting groove 2131, the second mounting groove 2132, and the third mounting groove 2133 may be the same or may be different. This is not limited in this application. In some embodiments, the third mounting groove 2133 may alternatively be located in the fourth side portion 211d or in another position. This is not limited in this application.

For example, the image stabilization bracket 21 may be further provided with a fourth mounting groove 2134, the fourth mounting groove 2134 is located at the fourth side portion 211d, and an opening of the fourth mounting groove 2134 faces the second through hole 2113.

For example, the fourth side portion 211d is further provided with a sliding groove 214. There may be two sliding grooves 214. The two sliding grooves 214 include a first sliding groove 2141 and a second sliding groove 2142, and the first sliding groove 2141 and the second sliding groove 2142 are located on two sides of the fourth mounting groove 2134. An extension direction of the sliding groove 214 may be parallel to the third direction Z.

For example, the image stabilization bracket 21 may further include a wire 215, and the wire 215 may be embedded in the image stabilization bracket body 211, to form a plurality of transmission channels for implementing signal transmission. The image stabilization bracket body 211 may form a body of the first side portion 211a, the second side portion 211b, the third side portion 211c, and the fourth side portion 211d. A quantity of wires 215 may be two, four, six, or the like. A plurality of wires 215 may be arranged in the first side portion 211a, the second side portion 211b, the third side portion 211c, and the fourth side portion 211d.

In some embodiments, an end part of the wire 215 may be exposed from the image stabilization bracket 21, and is configured to electrically connect to the mechanical part in the camera module 100. For example, the end part of the wire 215 may be exposed from the top surface 2111, or the end part of the wire 215 may be exposed from the fourth side portion 211d. In another embodiment, a region of the wire 215 that is exposed from the image stabilization bracket 21 may be set as required. This is not limited in this application.

For example, the image stabilization bracket 21 further includes a metal insert 216, and the metal insert 216 may be roughly C-shaped. The metal insert 216 may include a first insert 2161a, a first plate 2161b, a second insert 2162a, a second plate 2162b, a third insert 2163a, and a third plate 2163b. The first plate 2161b is connected between the first insert 2161a and the second insert 2162a, and protrudes from the first insert 2161a and the second insert 2162a. The second plate 2162b is connected between the second insert 2162a and the third insert 2163a, and protrudes from the second insert 2162a and the third insert 2163a. One end of the third plate 2163b is connected to the third insert 2163a, and protrudes from the third insert 2163a. For example, the first plate 2161b and the second plate 2162b may be disposed at an included angle. The first plate 2161b and the third plate 2163b may be disposed opposite to each other. The first insert 2161a and the second insert 2162a may be perpendicular to each other or roughly perpendicular to each other. The first insert 2161a and the third insert 2163a may be parallel or roughly parallel to each other.

It may be understood that the first insert 2161a, the first plate 2161b, the second insert 2162a, the second plate 2162b, the third insert 2163a, and the third plate 2163b of the metal insert 216 may be an integrally formed structure. For example, the first insert 2161a, the first plate 2161b, the second insert 2162a, the second plate 2162b, the third insert 2163a, and the third plate 2163b of the metal insert 216 may be formed by bending or stamping an integral metal member. This can reduce processing steps of the metal insert 216, thereby reducing processing costs. In other implementations, the first insert 2161a, the first plate 2161b, the second insert 2162a, the second plate 2162b, the third insert 2163a, and the third plate 2163b may alternatively be connected to form an integral structure through welding, bonding, snap fitting, or the like. This is not specifically limited in this application.

For example, the metal insert 216 may be embedded in the image stabilization bracket body 211, the first insert 2161a is embedded in a junction between the fourth side portion 211d and the first side portion 211a, the first plate 2161b is embedded in the first side portion 211a, the second insert 2162a is embedded in a junction between the first side portion 211a and the second side portion 211b, the second plate 2162b is embedded in the second side portion 211b, the third insert 2163a is embedded in a junction between the second side portion 211b and the third side portion 211c, and the third plate 2163b is embedded in the third side portion 211c. The first mounting groove 2131 is located in a region enclosed by the first insert 2161a, the first plate 2161b, and the second insert 2162a. The second mounting groove 2132 is located in a region enclosed by the second insert 2162a, the second plate 2162b, and the third insert 2163a. The third mounting groove 2133 is located in a region enclosed by the third insert 2163a and the third plate 2163b.

In this implementation, the metal insert 216 is embedded in the image stabilization bracket body 211, and may form an integral mechanical part with the image stabilization bracket body 211 through insert-molding (insert-molding) or the like. In this case, the metal insert 216 is embedded in the image stabilization bracket body 211. In this way, the metal insert 216 can enhance overall strength of the image stabilization bracket 21. In another implementation, at least a part of the first plate 2161b may alternatively be fixed to a bottom wall of the first mounting groove 2131 through bonding or the like. At least a part of the second plate 2162b may alternatively be fixed to a bottom wall of the second mounting groove 2132 through bonding or the like. At least a part of the third plate 2163b may alternatively be fixed to a bottom wall of the third mounting groove 2133 through bonding or the like.

FIG. 14 is a diagram 2 of a partial structure of the motor 1 shown in FIG. 6 in some embodiments.

As shown in FIG. 14, for example, the first image stabilization magnetic member 222 is mounted in the first mounting groove 2131, the second image stabilization magnetic member 224 is mounted in the second mounting groove 2132, and the compensation magnetic member 232 is mounted in the third mounting groove 2133. In this case, the compensation magnetic member 232, the first image stabilization magnetic member 222, and the second image stabilization magnetic member 224 can be arranged in an L-shaped configuration; the first image stabilization magnetic member 222 and the second image stabilization magnetic member 224 are arranged on the first side portion 211a and the second side portion 211b of the image stabilization bracket 21 respectively; the compensation magnetic member 232 is arranged on the third side portion 211c of the image stabilization bracket 21; and no mechanical part may be arranged on the fourth side portion 211d of the image stabilization bracket 21. In this way, three sides of the image stabilization bracket 21 can be fully utilized, and a volume of the remaining side can be reduced as possible, thereby facilitating a compact design of the entire motor 1.

In some embodiments, the first image stabilization magnetic member 222 has a first axis 21a, and the first axis 21a may pass through a center of the first image stabilization magnetic member 222 and is parallel to the first direction Y. The second image stabilization magnetic member 224 may have a second axis 21b, and the second axis 21b may pass through a center of the second image stabilization magnetic member 224 and is parallel to the second direction X. A center of the compensation magnetic member 232 is offset from both the first axis 21a and the second axis 21b. In this case, the first axis 21a does not pass through the center of the compensation magnetic member 232, and in the first direction Y, there is a spacing between the center of the compensation magnetic member 232 and the first axis 21a; and the second axis 21b does not pass through the center of the compensation magnetic member 232, and in the second direction X, there is a spacing between the center of the compensation magnetic member 232 and the second axis 21b. For example, the compensation magnetic member 232 may be located on a side of the first axis 21a close to the second image stabilization magnetic member 224. In another embodiment, the compensation magnetic member 232 may alternatively be located on a side of the first axis 21a away from the second image stabilization magnetic member 224.

In some examples, the compensation magnetic member 232 may be offset from both the first axis 21a and the second axis 21b. This can ensure that the center of the compensation magnetic member 232 is offset from both the first axis 21a and the second axis 21b, and can increase a moment of the compensation magnetic member 232.

For example, the first image stabilization magnetic member 222 may include one or more magnets, and the first image stabilization magnetic member 222 may be implemented in a plurality of structures. For example, in some embodiments, a dual-magnet solution may be used for the first image stabilization magnetic member 222. For example, two magnets are included, and the two magnets are arranged in the first direction Y and have opposite polarity directions. In some other embodiments, the first image stabilization magnetic member 222 is a Halbach array. For example, the first image stabilization magnetic member 222 may include at least three magnets. In the three adjacent magnets, polarity directions of the two edge magnets are opposite to each other and perpendicular to a direction in which the three magnets are arranged, and a polarity direction of the middle magnet is directed from one magnet of the edge magnets to the other magnet. In some other embodiments, a single-magnet solution may be used for the first image stabilization magnetic member 222. For example, one magnet is included, and the magnet includes two parts with opposite polarity directions. The magnet may be made by using a bipolar magnetization process. In this embodiment of this application, an example in which the first image stabilization magnetic member 222 is a Halbach array is used for description. This is not limited in this application.

For example, the second image stabilization magnetic member 224 may include one or more magnets, and the second image stabilization magnetic member 224 may be implemented in a plurality of structures. For example, in some embodiments, a dual-magnet solution may be used for the second image stabilization magnetic member 224. For example, two magnets are included, and the two magnets are arranged in the second direction X and have opposite polarity directions. In some other embodiments, the second image stabilization magnetic member 224 is a Halbach array. In some other embodiments, a single-magnet solution may be used for the second image stabilization magnetic member 224. For example, one magnet is included, and the magnet includes two parts with opposite polarity directions. The magnet may be made by using a bipolar magnetization process. In this embodiment of this application, an example in which the second image stabilization magnetic member 224 is a Halbach array is used for description. This is not limited in this application.

For example, the compensation magnetic member 232 may include one or more magnets, and the compensation magnetic member 232 may be implemented in a plurality of structures. For example, in some embodiments, a dual-magnet solution may be used for the compensation magnetic member 232. For example, two magnets are included, and the two magnets are arranged in the first direction Y and have opposite polarity directions. In some other embodiments, the compensation magnetic member 232 is a Halbach array. In some other embodiments, a single-magnet solution may be used for the compensation magnetic member 232. For example, one magnet is included, and a polarity direction of the magnet is parallel to the third direction Z. In this embodiment of this application, an example in which the compensation magnetic member 232 includes a single magnet is used for description. This is not limited in this application. In some examples, a length of the compensation magnetic member 232 may be less than a length of the first image stabilization magnetic member 222 and a length of the second image stabilization magnetic member 224. This helps reduce a space occupied by the compensation magnetic member 232 in the image stabilization bracket 21, helps reduce a size of the image stabilization bracket 21, and implements miniaturization of the motor 1.

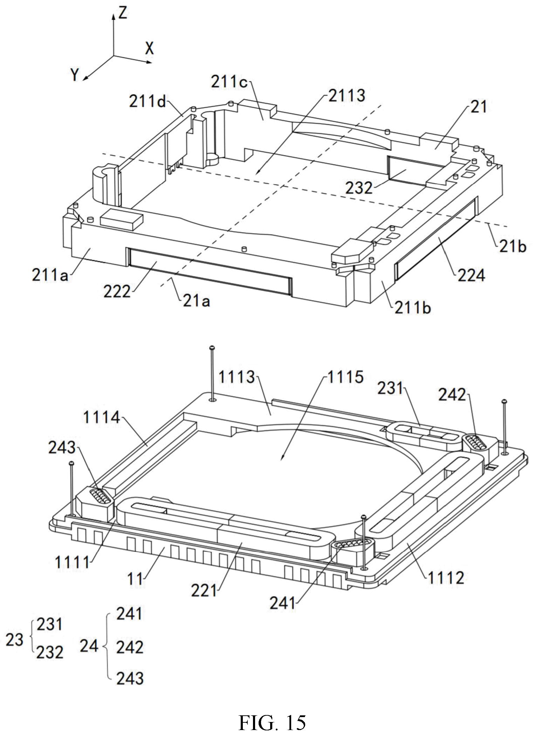

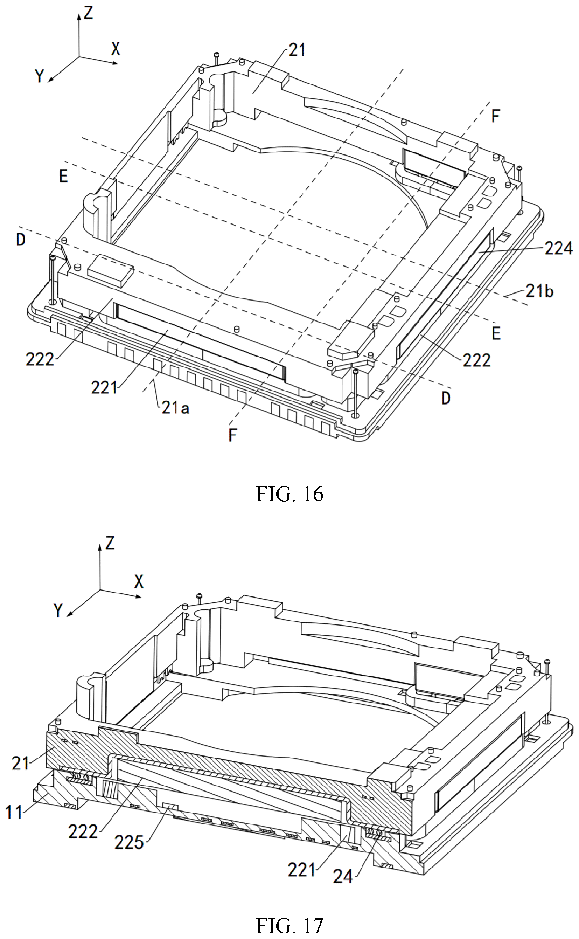

FIG. 15 is a diagram of a partial exploded structure of the motor 1 shown in FIG. 6 in some embodiments. FIG. 16 is a diagram 3 of a partial structure of the motor 1 shown in FIG. 6 in some embodiments. FIG. 17 is a diagram of a partial cross section of the motor 1 shown in FIG. 16 that is cut along D-D in some embodiments.

As shown in FIG. 15, FIG. 16, and FIG. 17, for example, the image stabilization bracket 21 may be movably connected to the base 11 via the first ball group 241, the second ball group 242, and the third ball group 243. The rolling connection between the image stabilization bracket 21 and the base 11 via the ball groups 24 enables the movable connection between the image stabilization bracket 21 and the base 11. In this implementation, the ball group 24 provides support, which ensures a sufficient support force and reduces friction resistance between balls and the image stabilization bracket 21, thereby improving the smoothness of the movement of the image stabilization bracket 21 movably connected to the base 11. In addition, the ball group 24 can provide multi-point support for the image stabilization bracket 21. This helps disperse stress, prevents the ball from being deformed when the ball is collided due to excessively concentrated forces in a single direction, and can improve reliability of supporting mechanical parts such as the image stabilization bracket 21 by the ball group 24. In another embodiment, the motor 1 may alternatively not include the ball group 24, but includes a guide shaft. The image stabilization bracket 21 may be movably connected to the base 11 via the guide shaft. This is not limited in this application. In this case, the first ball group 241 is connected to the junction between the first side portion 211a and the second side portion 211b, the second ball group 242 is connected to the junction between the second side portion 211b and the third side portion 211c, and the third ball group 243 is connected to the junction between the fourth side portion 211d and the first side portion 211a, so that the three ball groups 24 can form a three-point support structure, which ensures a bearing capacity of the ball group 24 for the image stabilization bracket 21, and helps reduce a quantity of ball groups 24 and reduce manufacturing costs of the motor 1.

For example, the first ball group 241 and the third ball group 243 may be located on a same side of the second axis 21b, and the second ball group 242 is located on the other side of the second axis 21b. In this way, opposite sides of the image stabilization bracket 21 can be supported by the ball group 24, so that the image stabilization bracket 21 can be prevented from being skewed due to a force exerted on one side in a movement process.

For example, the first ball group 241 and the third ball group 243 are respectively located on two opposite sides of the first axis 21a, to avoid a case in which the image stabilization bracket 21 is skewed toward one side when the three ball groups 24 are centrally distributed on a same side of the first axis 21a, which affects stability and reliability of the image stabilization bracket 21 in a movement process.

In some embodiments, the first side portion 211a corresponds to the first side region 1111, the second side portion 211b corresponds to the second side region 1112, the third side portion 211c corresponds to the third side region 1113, and the fourth side portion 211d corresponds to the fourth side region 1114. For example, the first through hole 1115 and the second through hole 2113 at least partially overlap. In other words, it may also be considered that the image stabilization bracket 21 and the base 11 are coaxially nested, to help improve arrangement compactness of mechanical parts in the motor 1, improve space utilization of the motor 1, and implement miniaturization of the motor 1. For example, both a center of the base 11 and a center of the image stabilization bracket 21 may be located on an optical axis of the lens 2 (as shown in FIG. 5).

For example, the first image stabilization magnetic member 222 is fixed to the image stabilization bracket 21, the first image stabilization coil 221 faces the first image stabilization magnetic member 222, and is configured to drive the image stabilization bracket 21 to move relative to the base 11 in the first direction Y, and the first image stabilization magnetic member 222 and the first image stabilization coil 221 are arranged in the third direction Z. The first image stabilization coil 221 facing the first image stabilization magnetic member 222 means that a winding plane of the first image stabilization coil 221 faces the first image stabilization magnetic member 222. For example, the winding plane of the first image stabilization coil 221 may be perpendicular to the third direction Z. In this case, the first image stabilization coil 221 may be disposed horizontally, which helps reduce a size of the motor 1 in the third direction Z and implement miniaturization of the motor 1. For example, the first position sensor 225 (as shown in FIG. 17) may be configured to detect a first magnetic field variation of the first image stabilization magnetic member 222 when the image stabilization bracket 21 moves in the first direction Y, that is, detect a position change of the image stabilization bracket 21 in the first direction Y.

In addition, the first image stabilization coil 221 and the first image stabilization magnetic member 222 are arranged in the third direction Z. During movement of the image stabilization bracket 21 relative to the base 11, a movement direction of the image stabilization bracket 21 may be perpendicular to a magnetic gap between the first image stabilization magnetic member 222 and the first image stabilization coil 221, and the magnetic gap is not affected by a movement action of the image stabilization bracket 21. This can avoid a rapid decrease in a driving force caused by an increase in the magnetic gap, provide a large image stabilization driving force while ensuring stability of the driving force, and facilitate a large-stroke image stabilization design.

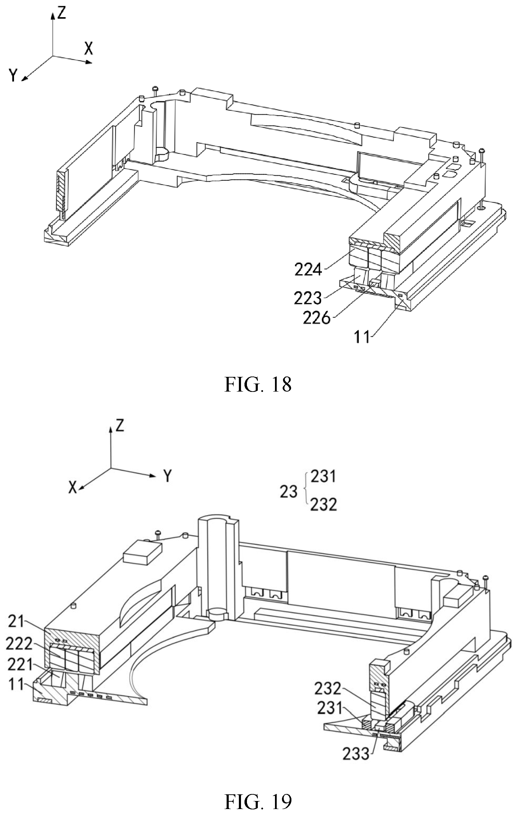

FIG. 18 is a diagram of a partial cross section of the motor 1 shown in FIG. 16 that is cut along E-E in some embodiments. FIG. 19 is a diagram of a partial cross section of the motor 1 shown in FIG. 16 that is cut along F-F in some embodiments.

As shown in FIG. 18, for example, the second image stabilization magnetic member 224 is fixed to the image stabilization bracket 21, the second image stabilization coil 223 faces the second image stabilization magnetic member 224, and is configured to drive the image stabilization bracket 21 to move relative to the base 11 in the second direction X, and the second image stabilization magnetic member 224 and the second image stabilization coil 223 are arranged in the third direction Z. The second image stabilization coil 223 facing the second image stabilization magnetic member 224 means that a winding plane of the second image stabilization coil 223 faces the second image stabilization magnetic member 224. For example, the winding plane of the second image stabilization coil 223 may be perpendicular to the third direction Z. In this case, the second image stabilization coil 223 may be disposed horizontally, which helps reduce the size of the motor 1 in the third direction Z and implement miniaturization of the motor 1. For example, the second position sensor 226 may be configured to detect a second magnetic field variation of the second image stabilization magnetic member 224 when the image stabilization bracket 21 moves in the second direction X, that is, detect a position change of the image stabilization bracket 21 in the second direction X.

In addition, the second image stabilization coil 223 and the second image stabilization magnetic member 224 are arranged in the third direction Z. During movement of the image stabilization bracket 21 relative to the base 11, a movement direction of the image stabilization bracket 21 may be perpendicular to a magnetic gap between the second image stabilization magnetic member 224 and the second image stabilization coil 223, and the magnetic gap is not affected by a movement action of the image stabilization bracket 21. This can avoid a rapid decrease in a driving force caused by an increase in the magnetic gap, provide a large image stabilization driving force while ensuring stability of the driving force, and facilitate a large-stroke image stabilization design.

As shown in FIG. 19, for example, the compensation magnetic member 232 is fixed to the image stabilization bracket 21, and the compensation coil 231 faces the compensation magnetic member 232. The compensation coil 231 facing the compensation magnetic member 232 means that a winding plane of the compensation coil 231 faces the compensation magnetic member 232. For example, the winding plane of the compensation coil 231 may be perpendicular to the third direction Z. In this case, the compensation coil 231 may be disposed horizontally, which helps reduce the size of the motor 1 in the third direction Z and implement miniaturization of the motor 1.

Disposing the compensation mechanism 23 can resolve the following problem: During movement of the image stabilization bracket 21 relative to the base 11, due to a mechanical structure and/or an assembly process of the motor 1, a resultant moment acting on the image stabilization bracket 21 may not be zero during its translation in the first direction Y or the second direction X, causing the image stabilization bracket 21 to deflect on the X-Y plane and be displaced relative to the base 11 in a direction other than the intended movement direction. This helps improve reliability and control precision of the motor 1.

The third position sensor 233 may be configured to: detect a third magnetic field variation of the compensation magnetic member 232 when the image stabilization bracket 21 moves in the first direction Y, and obtain a deflection amount of the image stabilization bracket 21 based on the third magnetic field variation and the first magnetic field variation. For example, when the image stabilization bracket 21 moves in the first direction Y, the first position sensor 225 can detect the first magnetic field variation of the first image stabilization magnetic member 222, and the third position sensor 233 can detect the third magnetic field variation of the compensation magnetic member 232. If the image stabilization bracket 21 is deflected, displacements of two opposite sides of the image stabilization bracket 21 in the first direction Y are different. In this case, the first magnetic field variation is not equal to the second magnetic field variation, and the third position sensor 233 may obtain the deflection amount of the image stabilization bracket 21 based on a difference between the first magnetic field variation and the third magnetic field variation.

For example, when the image stabilization bracket 21 moves in the second direction X, the third position sensor 233 can detect a fourth magnetic field variation of the compensation magnetic member 232. If the image stabilization bracket 21 is deflected, the image stabilization bracket 21 is displaced in the first direction Y. In this case, the fourth magnetic field variation is not zero, and the deflection amount of the image stabilization bracket 21 may be obtained based on the fourth magnetic field variation.

In the following descriptions, an example is used in which during movement of the image stabilization bracket 21 relative to the base 11 in the first direction Y and during movement of the image stabilization bracket 21 relative to the base 11 in the second direction X, a moment generated by friction of the ball groups 24 is not zero, causing the image stabilization bracket 21 to displace. In another embodiment, the compensation mechanism 23 can also be used to address displacements of the image stabilization bracket 21 caused by other reasons. For example, such displacements may occur when the center of gravity or the geometric center of the motor 1 does not coincide with the mechanical center in the X-axis and Y-axis directions. Details are not described in this application. In addition, in this embodiment of this application, the center of gravity and the geometric center of the motor 1 coincide with the force center between the X-axis direction and the Y-axis direction, and are located on the optical axis.

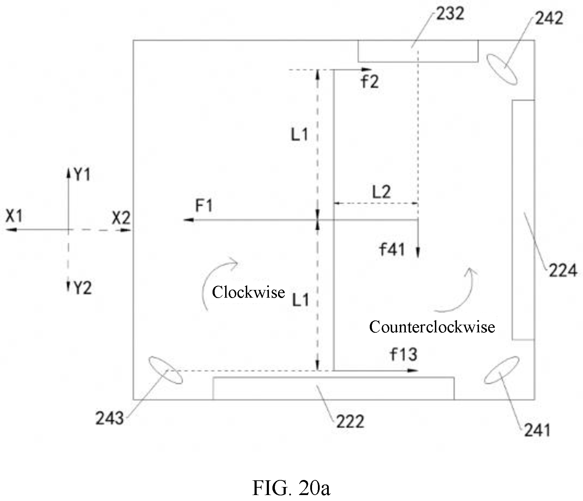

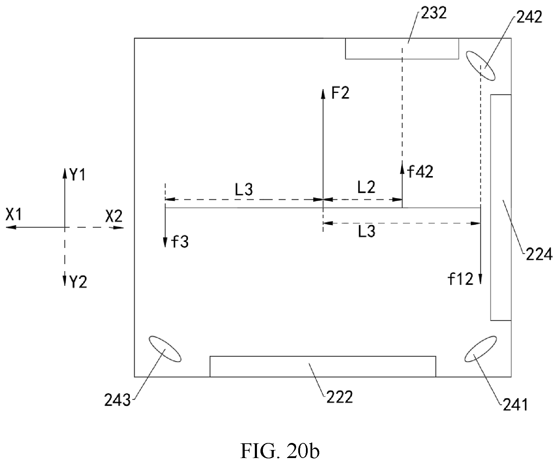

Solution 1: FIG. 20a is a diagram of an operating status of the compensation mechanism 23 according to an embodiment of this application. FIG. 20b is a diagram of another operating status of the compensation mechanism 23 according to an embodiment of this application.

As shown in FIG. 20a, for example, during movement of the image stabilization bracket 21 (as shown in FIG. 15) relative to the base 11 (as shown in FIG. 15) in a positive direction X1 of the second direction (a direction indicated by a solid line with an arrow in FIG. 20a), the following cases occur.

The image stabilization bracket 21 is subjected to a first driving force F1 generated by the second image stabilization magnetic member 224. A direction of the first driving force F1 is the positive direction X1 of the second direction, a moment arm of the first driving force F1 is zero, and a moment M1 generated by the first driving force F1 is 0. The first driving force F1 serves as a power source to drive the image stabilization bracket 21 to translate relative to the base 11 in the positive direction X1 of the second direction.

In a movement process, the image stabilization bracket 21 is further subjected to a first friction force f1 between the image stabilization bracket 21 and the first ball group 241, a second friction force f2 between the image stabilization bracket 21 and the second ball group 242, and a third friction force f3 between the image stabilization bracket 21 and the third ball group 243, where a moment arm of the first friction force f1, a moment arm of the second friction force f2, and a moment arm of the third friction force f3 are all L1. L1 is a distance, in the first direction Y, from a center of the first ball group 241, the second ball group 242, or the third ball group 243 to the center of the image stabilization bracket 21, L1 is not zero, and f13 in FIG. 20a represents a resultant force of the first friction force f1 and the third friction force f3. It may be understood that, in this embodiment of this application, a moment that causes the image stabilization bracket 21 to rotate counterclockwise is defined as a positive moment, and a moment that causes the image stabilization bracket 21 to rotate clockwise is defined as a negative moment. Accordingly, a first rotational moment acting on the image stabilization bracket 21 during the movement process, which is generated by the ball group 24, is expressed as M2=(f1×L1)+(f3×L1)-(f2×L1).

When M2≠0, the image stabilization bracket 21 is driven to rotate on the X-Y plane. This rotation prevents the image stabilization bracket 21 from driving the lens 2 to reach a preset position in the second direction X to achieve an image stabilization function of the motor 1, and causes an additional displacement of the lens 2 in the first direction Y, which affects control precision and reliability of the motor 1.

It may be understood that, in this embodiment of this application, the first image stabilization magnetic member 222 is disposed on the first side portion 211a (as shown in FIG. 15), but is absent from the third side portion 211c (as shown in FIG. 15) opposite to the first side portion 211a, resulting in unequal pressures exerted by the image stabilization bracket 21 on the base 11 at two opposite sides in the first direction Y. Consequently, friction forces provided by the ball groups 24 on the image stabilization bracket 21 at the two opposite sides in the first direction Y are also inconsistent, such that a sum of f1 and f3 is greater than f2. In this case, the first rotational moment M2 may be greater than 0. As a positive moment, the first rotational moment M2 drives the image stabilization bracket 21 to rotate counterclockwise relative to the base 11. In another embodiment, the image stabilization bracket 21 may alternatively be caused to rotate due to uneven forces on two opposite sides resulting from other reasons such as assembly errors of internal mechanical parts in the motor 1. This is not limited in this application.

For example, in this embodiment of this application, the compensation mechanism 23 (as shown in FIG. 15) is disposed, so that the image stabilization bracket 21 is further subjected to a first acting force f41 provided by the compensation magnetic member 232, to generate a first compensation moment M3 that is used to compensate for the first rotational moment M2. In this way, a resultant moment M4 acting on the image stabilization bracket 21 can be maintained at zero. This can ensure that under the action of the first driving force F1, the image stabilization bracket 21 can drive the lens 2 (as shown in FIG. 5) to translate in a preset direction (the positive direction X1 of the second direction) without deflection. A moment arm of the first acting force f41 is L2, L2 is a distance, in the second direction X, from the center of the compensation magnetic member 232 to the center of the image stabilization bracket 21, L2 is not zero, and M3=f41×L2.

A magnitude and direction of the current in the compensation coil 231 (as shown in FIG. 15) of the compensation mechanism 23 are adjusted, so that a magnitude of the first compensation moment M3 is equal to that of the first rotational moment M2. The first compensation moment M3 is a negative moment acting in a direction opposite to the first rotational moment M2. The first compensation moment M3 is used to drive the image stabilization bracket 21 to rotate clockwise relative to the base 11. This balances and counteracts the deflection that may occur when the image stabilization bracket 21 is subjected to the first rotational moment M2, thereby effectively improving control precision and reliability of the motor 1. In this case, an acting direction of the first acting force f41 may be a negative direction Y2 of the first direction, so that the image stabilization bracket 21 can rotate clockwise relative to the base 11 (M3<0). In another embodiment, there may alternatively be an included angle between a direction of the first acting force f41 and the negative direction Y2 of the first direction. Alternatively, when a relative position between the compensation mechanism 23 and the center of the image stabilization bracket 21 changes, a direction of the first acting force f41 may be a positive direction Y1 of the first direction or the second direction X. This is not limited in this application.

As shown in FIG. 20b, for example, during movement of the image stabilization bracket 21 (as shown in FIG. 15) relative to the base 11 (as shown in FIG. 15) in a positive direction Y1 of the first direction (a direction indicated by a solid line with an arrow in FIG. 20b), the following cases occur.

The image stabilization bracket 21 is subjected to a second driving force F2 generated by the first image stabilization magnetic member 222. A direction of the second driving force F2 is the positive direction Y1 of the first direction, a moment arm of the second driving force F2 is zero, and a moment M5 generated by the second driving force F2 is 0. The second driving force F2 serves as a power source to drive the image stabilization bracket 21 to translate relative to the base 11 in the positive direction Y1 of the first direction.

In a movement process, the image stabilization bracket 21 is further subjected to a first friction force f1 between the image stabilization bracket 21 and the first ball group 241, a second friction force f2 between the image stabilization bracket 21 and the second ball group 242, and a third friction force f3 between the image stabilization bracket 21 and the third ball group 243, where a moment arm of the first friction force f1, a moment arm of the second friction force f2, and a moment arm of the third friction force f3 are all L3. L3 is a distance, in the second direction X, from a center of the first ball group 241 to the center of the image stabilization bracket 21, L3 is not zero, and f12 in FIG. 20b represents a resultant force of the first friction force f1 and the second friction force f2. It may be understood that, in this embodiment of this application, a moment that causes the image stabilization bracket 21 to rotate counterclockwise is defined as a positive moment, and a moment that causes the image stabilization bracket 21 to rotate clockwise is defined as a negative moment. Accordingly, a second rotational moment acting on the image stabilization bracket 21 during the movement process, which is generated by the ball group 24, is expressed as M6=(f3×L3)-(f1×L3)-(f2×L3).

When M6≠0, the image stabilization bracket 21 is driven to rotate on the X-Y plane. This rotation prevents the image stabilization bracket 21 from driving the lens 2 to reach a preset position in the first direction Y to achieve an image stabilization function of the motor 1, and causes an additional displacement of the lens 2 in the second direction X, which affects control precision and reliability of the motor 1.

In this embodiment of this application, the second image stabilization magnetic member 224 is disposed on the second side portion 211b (as shown in FIG. 15), but is absent from the fourth side portion 211d (as shown in FIG. 15) opposite to the second side portion 211b, resulting in unequal pressures exerted by the image stabilization bracket 21 on the base 11 at two opposite sides in the second direction X. Consequently, friction forces provided by the ball groups 24 on the image stabilization bracket 21 at the two opposite sides in the second direction X are also inconsistent, such that a sum of f1 and f2 is greater than f3. In this case, the second rotational moment M6 may be less than 0. As a negative moment, the second rotational moment M6 drives the image stabilization bracket 21 to rotate clockwise relative to the base 11. In another embodiment, the image stabilization bracket 21 may alternatively be caused to rotate due to uneven forces on two opposite sides resulting from other reasons such as assembly errors of internal mechanical parts in the motor 1. This is not limited in this application.

For example, in this embodiment of this application, the compensation mechanism 23 is disposed, so that the image stabilization bracket 21 is further subjected to a second acting force f42 provided by the compensation magnetic member 232, to generate a second compensation moment M7 that is used to compensate for the second rotational moment M6. In this way, a resultant moment M4 acting on the image stabilization bracket 21 can be restored to zero. This can ensure that the image stabilization bracket 21 can drive the lens 2 to translate in a preset direction (the positive direction Y1 of the first direction) without deflection. A moment arm of the second acting force f42 is L2, L2 is a distance, in the second direction X, from the center of the compensation magnetic member 232 to the center of the image stabilization bracket 21, L2 is not zero, and M7=f42×L2.

A magnitude and direction of the current in the compensation coil 231 of the compensation mechanism 23 are adjusted, so that a magnitude of the second compensation moment M7 is equal to that of the second rotational moment M6. The second compensation moment M7 is a positive moment acting in a direction opposite to the second rotational moment M6. The second compensation moment M7 is used to drive the image stabilization bracket 21 to rotate counterclockwise relative to the base 11. This balances and counteracts the deflection that may occur when the image stabilization bracket 21 is subjected to the second rotational moment M6, maintaining the image stabilization bracket 21 in translational motion, thereby helping improve control precision and reliability of the motor 1. In this case, an acting direction of the second acting force f42 may be the positive direction Y1 of the first direction, so that the image stabilization bracket 21 can rotate counterclockwise relative to the base 11 (M7>0). In another embodiment, there may alternatively be an included angle between a direction of the second acting force f42 and the positive direction Y1 of the first direction. Alternatively, when a relative position between the compensation mechanism 23 and the center of the image stabilization bracket 21 changes, a direction of the second acting force f42 may be the second direction X. This is not limited in this application.

In the foregoing embodiment, as shown in FIG. 15, the compensation coil 231 is mounted in the third side region 1113, and is disposed close to the second ball group 242. In this case, the compensation magnetic member may be located at the upper right of the center of the image stabilization bracket 21. In some other embodiments, the compensation coil 231 may alternatively be mounted at another position. In this case, when a position of the compensation magnetic member 232 relative to the center of the image stabilization bracket 21 changes, directions, as well as magnitudes and directions of moment arms, of the first acting force f41 and/or the second acting force f42 change accordingly. For example, the compensation coil 231 may alternatively be mounted in the third side region 1113, and disposed away from the second ball group 242. Alternatively, the compensation coil 231 may be mounted in the fourth side region 1114, and disposed away from the third ball group 243. Alternatively, the compensation coil 231 may be mounted in the fourth side region 1114, and disposed close to the third ball group 243.

The following embodiments may include most of the technical solutions in the foregoing embodiments. The following mainly describes differences between the following embodiments and the foregoing embodiments, and most content that is the same between the following embodiments and the foregoing embodiments is not described in detail again.

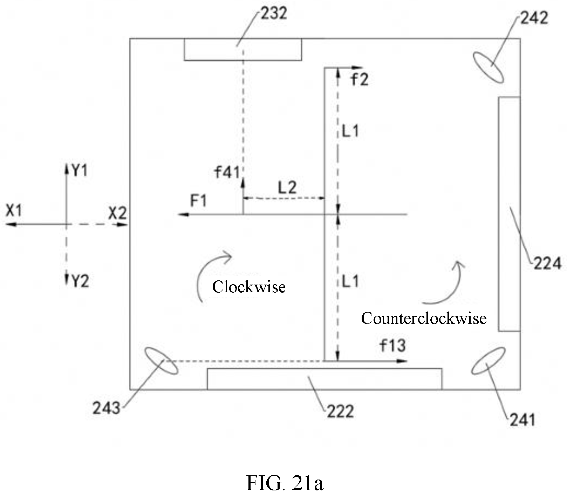

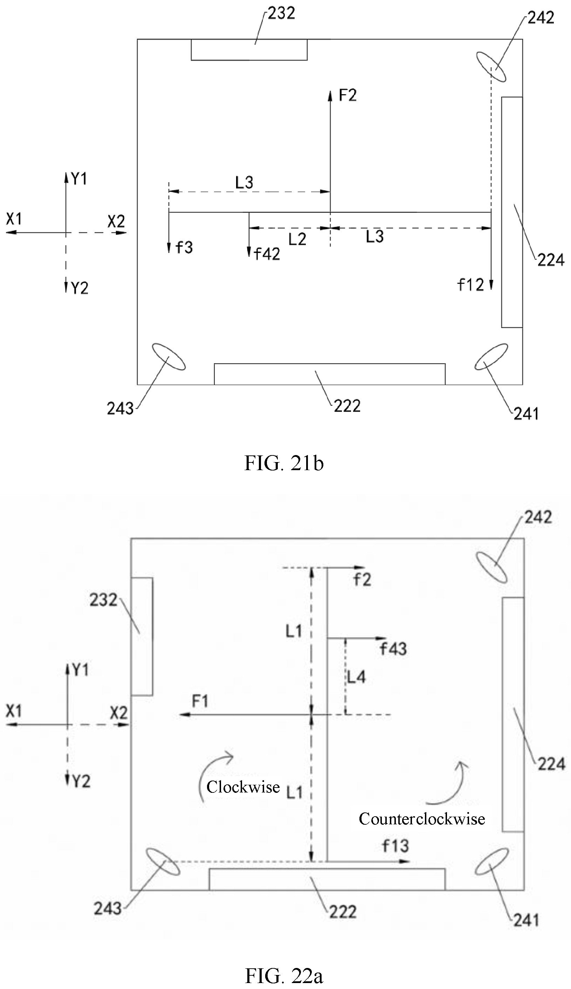

Solution 2: FIG. 21a is a diagram of another operating status of the compensation mechanism 23 according to an embodiment of this application. FIG. 21b is a diagram of another operating status of the compensation mechanism 23 according to an embodiment of this application.

The motor 1 shown in FIG. 21a and FIG. 21b differs from the motor 1 shown in FIG. 20a and FIG. 20b in that, in the motor 1 shown in FIG. 21a and FIG. 21b, the compensation coil 231 may alternatively be mounted in the third side region 1113, and disposed away from the second ball group 242, and the compensation magnetic member 232 is located at the upper left of the center of the image stabilization bracket 21.

As shown in FIG. 21a, for example, during movement of the image stabilization bracket 21 (as shown in FIG. 15) relative to the base 11 (as shown in FIG. 15) in a positive direction X1 of the second direction (a direction indicated by a solid line with an arrow in FIG. 21a), the following cases occur.

The image stabilization bracket 21 is subjected to a first driving force F1 in the positive direction X1 of the second direction, and a moment M1 generated by the first driving force F1 is 0. A first rotational moment M2 acting on the image stabilization bracket 21, which is generated by the ball group 24 during the movement process, is expressed as M2=(f1×L1)+(f3×L1)-(f2×L1), where M2>0.

In this embodiment of this application, the compensation mechanism 23 is disposed, so that the image stabilization bracket 21 is further subjected to a first acting force f41 provided by the compensation magnetic member 232, to generate a first compensation moment M3 that is used to compensate for the first rotational moment M2. In this way, a resultant moment M4 acting on the image stabilization bracket 21 can be maintained at zero.

A magnitude and direction of the current in the compensation coil 231 are adjusted, so that a magnitude of the first compensation moment M3 is equal to that of the first rotational moment M2. The first compensation moment M3 is a negative moment acting in a direction opposite to the first rotational moment M2. The first compensation moment M3 is used to drive the image stabilization bracket 21 to rotate clockwise relative to the base 11. This balances and counteracts the deflection that may occur when the image stabilization bracket 21 is subjected to the first rotational moment M2, thereby helping improve control precision and reliability of the motor 1. In this case, a moment arm of the first acting force f41 is L2. L2 is a distance, in the second direction X, from the center of the compensation magnetic member 232 to the center of the image stabilization bracket 21. M3=f41×L2. To cause the image stabilization bracket 21 to rotate clockwise relative to the base 11 (M3<0), an acting direction of the first acting force f41 may be a positive direction Y1 of the first direction.

As shown in FIG. 21b, for example, during movement of the image stabilization bracket 21 (as shown in FIG. 15) relative to the base 11 (as shown in FIG. 15) in the positive direction Y1 of the first direction (a direction indicated by a solid line with an arrow in FIG. 21b), the following cases occur.

The image stabilization bracket 21 is subjected to a second driving force F2 in the positive direction Y1 of the first direction, and a moment M5 generated by the second driving force F2 is 0. A second rotational moment acting on the image stabilization bracket 21, which is generated by the ball group 24 during the movement process, is expressed as M6=(f3×L3)-(f1×L3)-(f2×L3), where M6<0.

For example, in this embodiment of this application, the compensation mechanism 23 is disposed, so that the image stabilization bracket 21 is further subjected to a second acting force f42 provided by the compensation magnetic member 232, to generate a second compensation moment M7 that is used to compensate for the second rotational moment M6. In this way, a resultant moment M4 acting on the image stabilization bracket 21 can be maintained at zero.

A magnitude and direction of the current in the compensation coil 231 are adjusted, so that a magnitude of the second compensation moment M7 is equal to that of the second rotational moment M6. The second compensation moment M7 is a positive moment acting in a direction opposite to the second rotational moment M6. The second compensation moment M7 is used to drive the image stabilization bracket 21 to rotate counterclockwise relative to the base 11. This balances and counteracts the deflection that may occur when the image stabilization bracket 21 is subjected to the second rotational moment M6, thereby helping improve control precision and reliability of the motor 1. In this case, a moment arm of the second acting force f42 is L2. L2 is a distance, in the second direction X, from the center of the compensation magnetic member 232 to the center of the image stabilization bracket 21. M7=f42×L2. To cause the image stabilization bracket 21 to rotate counterclockwise relative to the base 11 (M7>0), an acting direction of the second acting force f42 may be a negative direction Y2 of the first direction. In another embodiment, there may alternatively be an included angle between a direction of the second acting force f42 and the negative direction Y2 of the first direction.

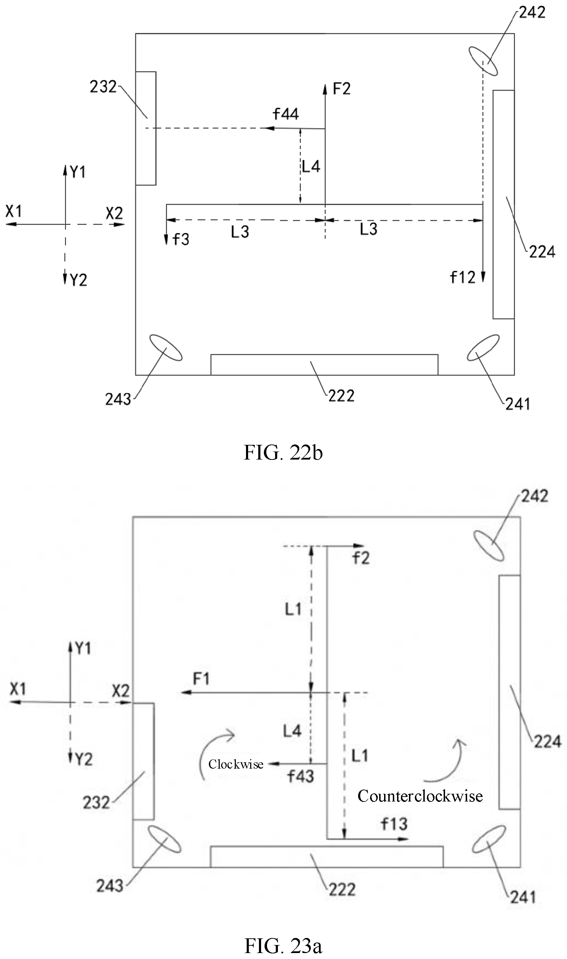

Solution 3: FIG. 22a is a diagram of another operating status of the compensation mechanism 23 according to an embodiment of this application. FIG. 22b is a diagram of another operating status of the compensation mechanism 23 according to an embodiment of this application.

The motor 1 shown in FIG. 22a and FIG. 22b differs from the motor 1 shown in FIG. 20a and FIG. 20b in that, in the motor 1 shown in FIG. 22a and FIG. 22b, the compensation coil 231 may alternatively be mounted in the fourth side region 1114, and disposed away from the third ball group 243, and the compensation magnetic member 232 is located at the upper left of the center of the image stabilization bracket 21.

As shown in FIG. 22a, for example, during movement of the image stabilization bracket 21 (as shown in FIG. 15) relative to the base 11 (as shown in FIG. 15) in a positive direction X1 of the second direction (a direction indicated by a solid line with an arrow in FIG. 22a), the following cases occur.

The image stabilization bracket 21 is subjected to a first driving force F1 in the positive direction X1 of the second direction, and a moment M1 generated by the first driving force F1 is 0. A first rotational moment M2 acting on the image stabilization bracket 21, which is generated by the ball group 24 during the movement process, is expressed as M2=(f1×L1)+(f3×L1)-(f2×L1), where M2>0.

In this embodiment of this application, the compensation mechanism 23 is disposed, so that the image stabilization bracket 21 is further subjected to a third acting force f43 provided by the compensation magnetic member 232, to generate a third compensation moment M8 that is used to compensate for the first rotational moment M2. In this way, a resultant moment M4 acting on the image stabilization bracket 21 can be maintained at zero.

A magnitude and direction of the current in the compensation coil 231 are adjusted, so that a magnitude of the third compensation moment M8 is equal to that of the first rotational moment M2. The third compensation moment M8 is a negative moment acting in a direction opposite to the first rotational moment M2. The third compensation moment M8 is used to drive the image stabilization bracket 21 to rotate clockwise relative to the base 11. This balances and counteracts the deflection that may occur when the image stabilization bracket 21 is subjected to the first rotational moment M2, thereby helping improve control precision and reliability of the motor 1. In this case, a moment arm of the third acting force f43 is L4. L4 is a distance, in the first direction Y, from the center of the compensation magnetic member 232 to the center of the image stabilization bracket 21. M8=f43×L4. To cause the image stabilization bracket 21 to rotate clockwise relative to the base 11 (M8<0), an acting direction of the third acting force f43 may be a negative direction X2 of the second direction.

As shown in FIG. 22b, for example, during movement of the image stabilization bracket 21 (as shown in FIG. 15) relative to the base 11 (as shown in FIG. 15) in a positive direction Y1 of the first direction (a direction indicated by a solid line with an arrow in FIG. 22b), the following cases occur.

The image stabilization bracket 21 is subjected to a second driving force F2 in the positive direction Y1 of the first direction, and a moment M5 generated by the second driving force F2 is 0. A second rotational moment acting on the image stabilization bracket 21, which is generated by the ball group 24 during the movement process, is expressed as M6=(f3×L3)-(f1×L3)-(f2×L3), where M6<0.

For example, in this embodiment of this application, the compensation mechanism 23 is disposed, so that the image stabilization bracket 21 is further subjected to a fourth acting force f44 provided by the compensation magnetic member 232, to generate a fourth compensation moment M9 that is used to compensate for the second rotational moment M6. In this way, a resultant moment M4 acting on the image stabilization bracket 21 can be maintained at zero.

A magnitude and direction of the current in the compensation coil 231 are adjusted, so that a magnitude of the fourth compensation moment M9 is equal to that of the second rotational moment M6. The fourth compensation moment M9 is a positive moment acting in a direction opposite to the second rotational moment M6. The fourth compensation moment M9 is used to drive the image stabilization bracket 21 to rotate counterclockwise relative to the base 11. This balances and counteracts the deflection that may occur when the image stabilization bracket 21 is subjected to the second rotational moment M6, thereby helping improve control precision and reliability of the motor 1. In this case, a moment arm of the fourth acting force f44 is L4. L4 is a distance, in the first direction Y, from the center of the compensation magnetic member 232 to the center of the image stabilization bracket 21. M9=f44×L4. To cause the image stabilization bracket 21 to rotate counterclockwise relative to the base 11 (M9>0), an acting direction of the fourth acting force f44 may be a positive direction X1 of the second direction. In another embodiment, there may alternatively be an included angle between a direction of the fourth acting force f44 and the positive direction X1 of the second direction.

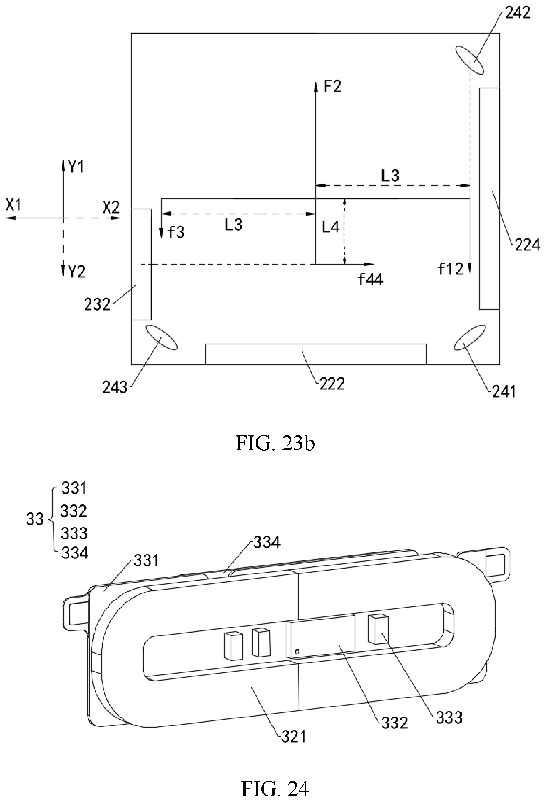

Solution 4: FIG. 23a is a diagram of another operating status of the compensation mechanism 23 according to an embodiment of this application. FIG. 23b is a diagram of another operating status of the compensation mechanism 23 according to an embodiment of this application.

The motor 1 shown in FIG. 23a and FIG. 23b differs from the motor 1 shown in FIG. 20a and FIG. 20b in that, in the motor 1 shown in FIG. 23a and FIG. 23b, the compensation coil 231 may alternatively be mounted in the fourth side region 1114, and disposed close to the third ball group 243, and the compensation magnetic member 232 is located at the lower left of the center of the image stabilization bracket 21.

As shown in FIG. 23a, for example, during movement of the image stabilization bracket 21 (as shown in FIG. 15) relative to the base 11 (as shown in FIG. 15) in a positive direction X1 of the second direction (a direction indicated by a solid line with an arrow in FIG. 23a), the following cases occur.

The image stabilization bracket 21 is subjected to a first driving force F1 in the positive direction X1 of the second direction, and a moment M1 generated by the first driving force F1 is 0. A first rotational moment M2 acting on the image stabilization bracket 21, which is generated by the ball group 24 during the movement process, is expressed as M2=(f1×L1)+(f3×L1)-(f2×L1), where M2>0.

In this embodiment of this application, the compensation mechanism 23 is disposed, so that the image stabilization bracket 21 is further subjected to a third acting force f43 provided by the compensation magnetic member 232, to generate a third compensation moment M8 that is used to compensate for the first rotational moment M2. In this way, a resultant moment M4 acting on the image stabilization bracket 21 can be maintained at zero.

A magnitude and direction of the current in the compensation coil 231 are adjusted, so that a magnitude of the third compensation moment M8 is equal to that of the first rotational moment M2. The third compensation moment M8 is a negative moment acting in a direction opposite to the first rotational moment M2. The third compensation moment M8 is used to drive the image stabilization bracket 21 to rotate clockwise relative to the base 11. This balances and counteracts the deflection that may occur when the image stabilization bracket 21 is subjected to the first rotational moment M2, thereby helping improve control precision and reliability of the motor 1. In this case, a moment arm of the third acting force f43 is L4. L4 is a distance, in the first direction Y, from the center of the compensation magnetic member 232 to the center of the image stabilization bracket 21. M8=f43×L4. To cause the image stabilization bracket 21 to rotate clockwise relative to the base 11 (M8<0), an acting direction of the third acting force f43 may be the positive direction X1 of the second direction.

As shown in FIG. 23b, for example, during movement of the image stabilization bracket 21 (as shown in FIG. 15) relative to the base 11 (as shown in FIG. 15) in a positive direction Y1 of the first direction (a direction indicated by a solid line with an arrow in FIG. 23b), the following cases occur.

The image stabilization bracket 21 is subjected to a second driving force F2 in the positive direction Y1 of the first direction, and a moment M5 generated by the second driving force F2 is 0. A second rotational moment acting on the image stabilization bracket 21, which is generated by the ball group 24 during the movement process, is expressed as M6=(f3×L3)-(f1×L3)-(f2×L3), where M6<0.

For example, in this embodiment of this application, the compensation mechanism 23 is disposed, so that the image stabilization bracket 21 is further subjected to a fourth acting force f44 provided by the compensation magnetic member 232, to generate a fourth compensation moment M9 that is used to compensate for the second rotational moment M6. In this way, a resultant moment M4 acting on the image stabilization bracket 21 can be maintained at zero.

A magnitude and direction of the current in the compensation coil 231 are adjusted, so that a magnitude of the fourth compensation moment M9 is equal to that of the second rotational moment M6. The fourth compensation moment M9 is a positive moment acting in a direction opposite to the second rotational moment M6. The fourth compensation moment M9 is used to drive the image stabilization bracket 21 to rotate counterclockwise relative to the base 11. This balances and counteracts the deflection that may occur when the image stabilization bracket 21 is subjected to the second rotational moment M6, thereby helping improve control precision and reliability of the motor 1. In this case, a moment arm of the fourth acting force f44 is L4. L4 is a distance, in the first direction Y, from the center of the compensation magnetic member 232 to the center of the image stabilization bracket 21. M9=f44×L4. To cause the image stabilization bracket 21 to rotate counterclockwise relative to the base 11 (M9>0), an acting direction of the fourth acting force f44 may be a negative direction X2 of the second direction. In another embodiment, there may alternatively be an included angle between a direction of the fourth acting force f44 and the negative direction X2 of the second direction.

FIG. 24 is a diagram of an assembled structure of the circuit board assembly 33 and the focusing coil 321 shown in FIG. 6.

As shown in FIG. 24, in some embodiments, both the focusing drive chip 332 and the focusing sensor 333 of the circuit board assembly 33 are fixed to the focusing circuit board 331 and are electrically connected to the focusing circuit board 331. The focusing coil 321 is fixed to the focusing circuit board 331 and is electrically connected to the focusing circuit board 331. It may be understood that an input end and an output end of the focusing coil 321 may form a current loop with the focusing drive chip 332 via the focusing circuit board 331. In this case, the focusing drive chip 332 may control a current status of the focusing coil 321 (for example, whether a current is applied, a magnitude of the current when the coil is energized, or the like) via the focusing circuit board 331. For example, the focusing coil 321 may be disposed around the focusing drive chip 332 and the focusing sensor 333. In this way, the focusing drive chip 332 and the focusing sensor 333 can effectively use an inner space of the focusing coil 321, thereby greatly improving space utilization of the motor 1.

For example, the focusing sensor 333 is configured to implement position detection, and the focusing sensor 333 may be a Hall (hall) effect sensor or a tunnel magneto-resistance (tunnel magneto-resistance, TMR) sensor.

For example, the focusing stiffener 334 may be fixed to a side, opposite to the focusing coil 321, of the focusing circuit board 331, to enhance structural strength of the circuit board assembly 33 and reduce a risk of deformation of the focusing circuit board 331. It may be understood that a position, a size, and a shape of the focusing stiffener 334 are not specifically limited in implementations.

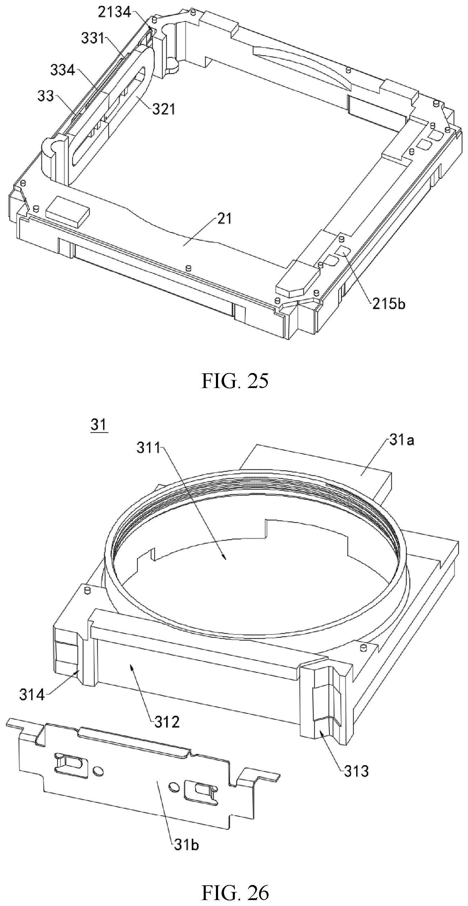

FIG. 25 is a diagram 4 of a partial structure of the motor 1 shown in FIG. 6 in some embodiments.

As shown in FIG. 24 and FIG. 25, for example, the circuit board assembly 33 is mounted in the fourth mounting groove 2134 of the image stabilization bracket 21, for being fixed to the image stabilization bracket 21. In this case, the focusing coil 321 is fixed to the image stabilization bracket 21 via the focusing circuit board 331. It may be understood that at least a part of the circuit board assembly 33 is located in the fourth mounting groove 2134, allowing for a compact arrangement between the circuit board assembly 33 and the image stabilization bracket 21. This helps improve space utilization.

For example, both the focusing circuit board 331 and the focusing stiffener 334 of the circuit board assembly 33 may be fixed to the fourth mounting groove 2134 through adhesive bonding or the like.

FIG. 26 is a diagram of a partial exploded structure of the focusing bracket 31 shown in FIG. 6 from another perspective.

As shown in FIG. 26, in some embodiments, the focusing bracket 31 may be roughly frame-shaped, and the focusing bracket 31 has a third through hole 311. The focusing bracket 31 is provided with a fifth mounting groove 312, a third sliding groove 313, and a fourth sliding groove 314. Openings of the fifth mounting groove 312, the third sliding groove 313, and the fourth sliding groove 314 may all be provided opposite to the third through hole 311.

For example, the third sliding groove 313 and the fourth sliding groove 314 may be located on two sides of the fifth mounting groove 312. Extension directions of the third sliding groove 313 and the fourth sliding groove 314 may be parallel to the third direction Z.

It may be understood that the third through hole 311 of the focusing bracket 31 is used to mount the lens 2 (as shown in FIG. 5). For example, a central axis of the focusing bracket 31 is parallel to the optical axis of the lens 2.

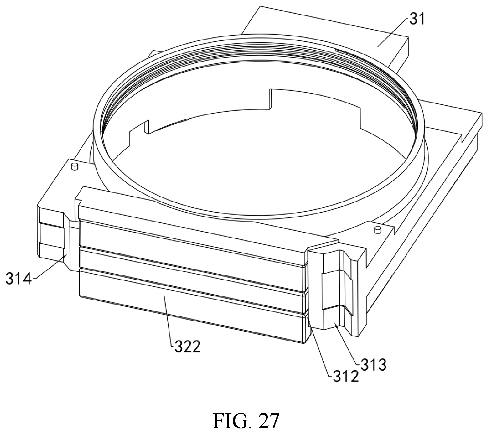

FIG. 27 is a diagram 5 of a partial structure of the motor 1 shown in FIG. 6 in some embodiments.

As shown in FIG. 26 and FIG. 27, in some embodiments, the focusing magnetic member 322 may be mounted in the fifth mounting groove 312 of the focusing bracket 31, for being fixed to the focusing bracket 31.

For example, the focusing magnetic member 322 may include one or more magnets, and the focusing magnetic member 322 may be implemented in a plurality of structures. For example, in some embodiments, a dual-magnet solution may be used for the focusing magnetic member 322. For example, two magnets are included, and the two magnets are arranged in the first direction Y and have opposite polarity directions. In some other embodiments, the focusing magnetic member 322 is a Halbach array. In some other embodiments, a single-magnet solution may be used for the focusing magnetic member 322. For example, one magnet is included, and the magnet includes two parts with opposite polarity directions. The magnet may be made by using a bipolar magnetization process. In this embodiment of this application, an example in which the focusing magnetic member 322 is a Halbach array is used for description. This is not limited in this application.

As shown in FIG. 26 and FIG. 27, in some embodiments, the focusing bracket 31 may include a focusing bracket body 31a and a focusing magnetic conductive member 31b. The focusing magnetic conductive member 31b is fixed between the focusing bracket body 31a and the focusing magnetic member 322, to enhance magnetic field directivity of the focusing magnetic member 322. For example, the focusing magnetic conductive member 31b may form an integral mechanical part with the focusing bracket body 31a through insert-molding (insert-molding) or the like. In this case, the focusing magnetic conductive member 31b is embedded in the focusing bracket 31. In another implementation, the focusing magnetic conductive member 31b is mainly distributed between the focusing magnetic member 322 and a bottom wall of the fifth mounting groove 312. The focusing magnetic conductive member 31b may be fixed to the focusing bracket body 31a through bonding or the like, and the focusing magnetic member 322 may be fixed to the focusing magnetic conductive member 31b through bonding or the like.

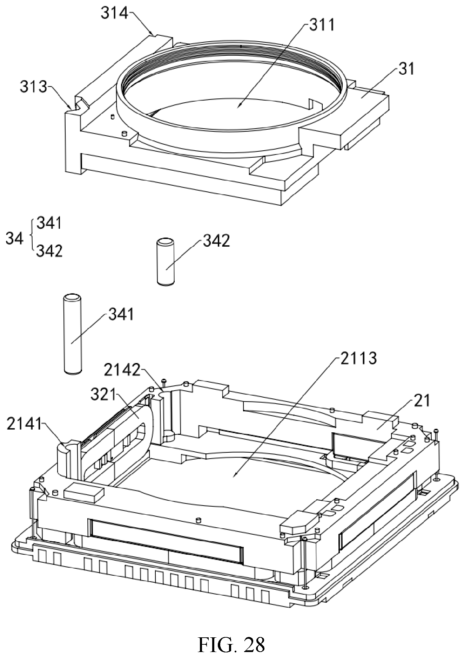

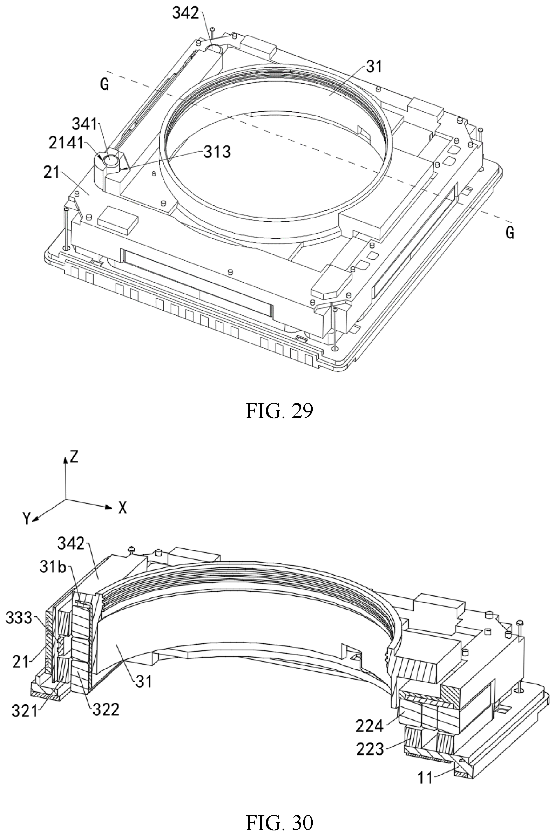

FIG. 28 is a diagram of a partial exploded structure of the motor 1 shown in FIG. 6 in some embodiments. FIG. 29 is a diagram 6 of a partial structure of the motor 1 shown in FIG. 6 in some embodiments.

As shown in FIG. 28 and FIG. 29, for example, the focusing bracket 31 is mounted on an inner side of the image stabilization bracket 21, and the third through hole 311 and the second through hole 2113 at least partially overlap. In other words, it may also be considered that the focusing bracket 31 and the image stabilization bracket 21 are coaxially nested, to help improve arrangement compactness of mechanical parts in the motor 1, improve space utilization of the motor 1, and implement miniaturization of the motor 1.

In some embodiments, the focusing magnetic member 322 is disposed opposite to the focusing coil 321. In this case, the third sliding groove 313 corresponds to the first sliding groove 2141, and the fourth sliding groove 314 corresponds to the second sliding groove 2142. For example, there may be two guide rods 34, and the two guide rods 34 include a first guide rod 341 and a second guide rod 342. A part of the first guide rod 341 is located in the first sliding groove 2141, and the other part of the first guide rod 341 is located in the third sliding groove 313. A part of the second guide rod 342 is located in the second sliding groove 2142, and the other part of the second guide rod 342 is located in the fourth sliding groove 314. For example, the two guide rods 34 may be the same or different in shape, size, material, and the like. In this embodiment of this application, an example in which a length of the first guide rod 341 in the third direction Z is greater than a length of the second guide rod 342 is used for description.

It may be understood that the focusing bracket 31 may be slidably connected to the image stabilization bracket 21 via the first guide rod 341 and the second guide rod 342, and a relative sliding direction of the two is parallel to a guiding direction of the guide rod 34, namely, the third direction Z. In another embodiment, the focusing bracket 31 may alternatively be slidably connected to the image stabilization bracket 21 via balls, and a direction in which a plurality of balls are arranged is a guiding direction of the plurality of balls.

In some embodiments, the guide rod 34 is made of a ceramic material, so that manufacturing costs of the guide rod 34 can be effectively reduced, and a mass of the guide rod 34 can be reduced. Therefore, the guide rod 34 can be firmly fixed to the image stabilization bracket 21 or the focusing bracket 31 through adhesive bonding or the like. This also helps reduce manufacturing difficulty of the motor 1.

In some embodiments, cooperation between the guide rod 34 and the focusing bracket 31 includes interference fit and clearance fit, to reduce assembly difficulty. For example, as shown in FIG. 24, the third sliding groove 313 and the fourth sliding groove 314 of the focusing bracket 31 include at least one "V"-shaped groove and at least one "U"-shaped groove or "L"-shaped groove. When the "V"-shaped groove cooperates with the guide rod 34, a side groove wall of the "V"-shaped groove is in contact with the guide rod 34 to implement interference fit. For example, the third sliding groove 313 is a "V"-shaped groove. When the "U"-shaped groove or the "L"-shaped groove cooperates with the guide rod 34, a groove wall of the "U"-shaped groove or the "L"-shaped groove is in contact with the guide rod 34, to implement clearance fit. For example, the third sliding groove 313 may be a "V"-shaped groove, and in this case, interference fit is achieved between the first guide rod 341 and the third sliding groove 313. The fourth sliding groove 314 is an "L"-shaped groove, and in this case, clearance fit is achieved between the second guide rod 342 and the fourth sliding groove 314.

It may be understood that, in some other embodiments, there may be another implementation solution for interference fit and clearance fit between the guide rod 34 and the focusing bracket 31 or the image stabilization bracket 21. This is not strictly limited in embodiments of this application.

FIG. 30 is a diagram of a partial cross section of the motor 1 shown in FIG. 29 that is cut along G-G in some embodiments.

As shown in FIG. 30, the focusing coil 321 is fixed to the image stabilization bracket 21, the focusing magnetic member 322 is fixed to the focusing bracket 31, and the focusing coil 321 faces the focusing magnetic member 322 and is configured to drive the focusing bracket 31 to move relative to the image stabilization bracket 21 in the third direction Z. When the focusing bracket 31 moves relative to the image stabilization bracket 21 in the third direction Z, the focusing bracket 31 may drive the lens 2 (as shown in FIG. 5) mounted on the focusing bracket 31 to move in the third direction Z. In this case, the motor 1 may achieve a focusing function. The focusing coil 321 facing the focusing magnetic member 322 means that a winding plane of the focusing coil 321 faces the focusing magnetic member 322. For example, the focusing sensor 333 fixed to the focusing circuit board 331 may be configured to detect a position change of the focusing bracket 31 in the third direction Z.

In this embodiment, during movement of the focusing bracket 31 relative to the image stabilization bracket 21, a movement direction of the focusing bracket 31 is perpendicular to a magnetic gap between the focusing magnetic member 322 and the focusing coil 321, and the magnetic gap is not affected by a movement action of the focusing bracket 31. This can avoid a rapid decrease in a driving force caused by an increase in the magnetic gap, thereby ensuring a large and stable focusing driving force of the motor 1, and facilitating a large-stroke design for the focusing function of the motor 1.

The focusing drive mechanism 32, the compensation mechanism 23, the first image stabilization drive mechanism 22a, and the second image stabilization drive mechanism 22b of the motor 1 are all of a moving magnet design. The driving of the motor 1 in the first direction Y, the second direction X, and the third direction Z is independently controlled by a respective set of driving members (each set including a coil and a magnetic member). During movement of the focusing bracket 31 of the motor 1 relative to the image stabilization bracket 21 in the third direction Z for automatic focusing, a relative position between the image stabilization bracket 21 and the base 11 is not affected, and magnetic gap widths of the first image stabilization drive mechanism 22a, the second image stabilization drive mechanism 22b, and the compensation mechanism 23 are not likely to change. Similarly, during movement of the image stabilization bracket 21 relative to the base 11 in the first direction Y and/or the second direction X for optical image stabilization, the focusing bracket 31 moves along with the image stabilization bracket 21, a relative position between the focusing bracket 31 and the image stabilization bracket 21 is not affected, and a magnetic gap width of the focusing drive mechanism 32 is not likely to change. Therefore, the focusing drive mechanism 32 of the motor 1 is decoupled from the first image stabilization drive mechanism 22a, the second image stabilization drive mechanism 22b, and the compensation mechanism 23, preventing mutual interference during movement, which helps ensure driving precision of the motor 1.

In addition, the focusing bracket 31 is located on the inner side of the image stabilization bracket 21, the focusing coil 321 is fixed to the image stabilization bracket 21, and the focusing magnetic member 322 is fixed to the focusing bracket 31. Therefore, a mover assembly for optical image stabilization of the motor 1 surrounds a focusing mover assembly. It may be understood that when the focusing bracket 31 is located on the inner side of the image stabilization bracket 21, the image stabilization bracket 21 may be disposed around the focusing bracket 31. The being disposed around may be that the image stabilization bracket 21 is disposed fully around the focusing bracket 31, or may be that a part of the image stabilization bracket 21 is disposed around the focusing bracket 31. In this implementation, the image stabilization bracket 21 is annular. In this case, the image stabilization bracket 21 is disposed around the focusing bracket 31.

It may be understood that in some solutions, the image stabilization bracket 21 is located on the inner side of the focusing bracket 31. In this case, when the camera module 100 needs to focus, the focusing bracket 31 needs to drive the image stabilization bracket 21 and the lens 2 to move in the third direction Z. In this way, a mover formed by the focusing bracket 31, the image stabilization bracket 21, and the lens 2 has a heavy weight. Consequently, the focusing drive mechanism 32 needs to increase a driving force by increasing a volume. Therefore, such an arrangement is not conducive to a light-weight and compact design of the motor 1. However, in this embodiment, the focusing bracket 31 is disposed on the inner side of the image stabilization bracket 21. In this case, when the camera module 100 needs to focus, the focusing bracket 31 needs to drive the lens 2 to move in the third direction Z. In this way, in this implementation, the image stabilization bracket 21 can be omitted from a mover in a focusing process, that is, a mover formed by the focusing bracket 31 and the lens 2 has a light weight. This facilitates a compact design of the focusing drive mechanism 32. The motor 1 in this implementation can implement a light-weight and compact design.

It may be understood that in the solution in which the image stabilization bracket 21 is located on the inner side of the focusing bracket 31, the image stabilization bracket 21 requires at least two image stabilization drive assemblies to drive the image stabilization bracket 21 to move on the X-Y plane. In this way, at least two sets of wires need to be arranged in the motor 1 to provide a signal and supply power for the image stabilization drive assemblies, and the at least two sets of wires need to pass through the focusing bracket 31. Consequently, an energizing setting in this solution is complex, increasing difficulty in disposing the motor 1. However, in this embodiment, the focusing bracket 31 is disposed on the inner side of the image stabilization bracket 21. Because the focusing bracket 31 requires one set of focusing drive mechanism 32 to drive the focusing bracket 31 to move in the third direction Z, the motor 1 requires one set of wires to provide a signal and supply power for the focusing drive mechanism 32, that is, one set of wires needs to pass through the image stabilization bracket 21. Therefore, an energizing solution of the solution in this implementation is simple, and can greatly reduce difficulty in disposing the motor 1.

As shown in FIG. 30, the winding plane of the focusing coil 321 may be parallel to the third direction Z. In this case, the focusing coil 321 is vertically arranged, so that the focusing coil 321 may occupy a small area on the X-Y plane, thereby facilitating a compact design of the motor 1. The focusing magnetic member 322 may include two opposite polarity directions, and the two polarity directions are perpendicular to the third direction Z. In this case, the focusing magnetic member 322 may be vertically arranged, to reduce a space occupied by the focusing magnetic member 322 on the X-Y plane. This facilitates a compact design of the motor 1.

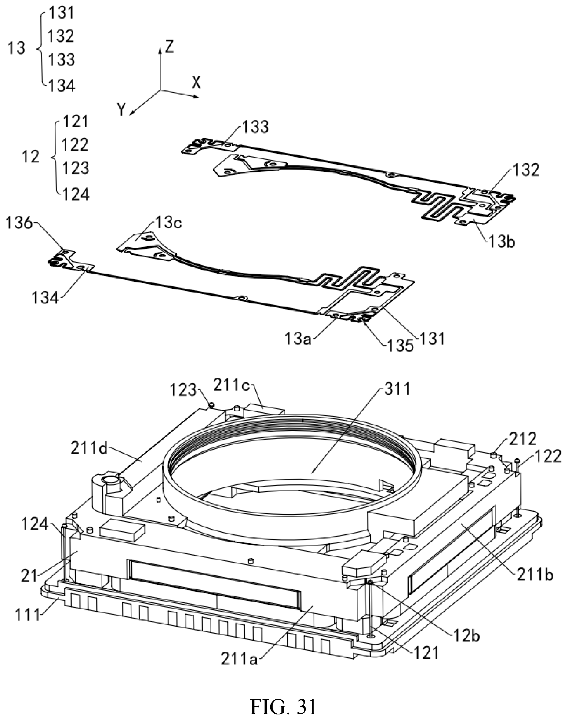

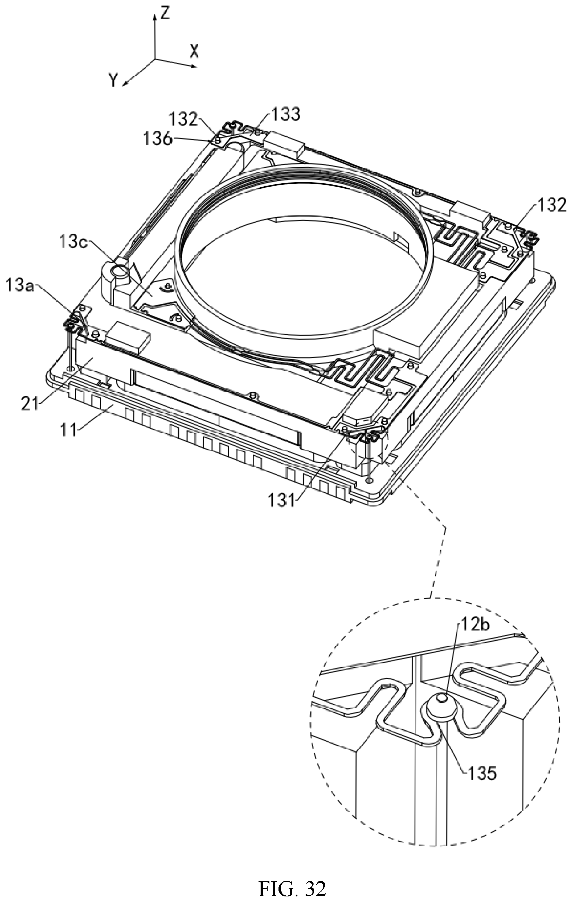

FIG. 31 is a diagram of a partial exploded structure of the motor 1 shown in FIG. 6 in some embodiments. FIG. 32 is a diagram 7 of a partial structure of the motor 1 shown in FIG. 31 in some embodiments.

As shown in FIG. 31 and FIG. 32, in some embodiments, there may be four spring plates 13. The four spring plates 13 may include a first spring plate 131, a second spring plate 132, a third spring plate 133, and a fourth spring plate 134. An arrangement plane of the four spring plates 13 may be perpendicular to the third direction Z and located on a side of the image stabilization bracket 21 away from the bottom plate 111. For example, the first spring plate 131 may include a first connection end 13a, a second connection end 13b, and a third connection end 13c that are sequentially connected, and parts in the first spring plate 131 may be bent a plurality of times. This can effectively reduce an elastic coefficient of the first spring plate 131. Each of the second spring plate 132, the third spring plate 133, and the fourth spring plate 134 may also include a first connection end 13a, a second connection end 13b, and a third connection end 13c. For positions and the like of the first connection end 13a, the second connection end 13b, and the third connection end 13c in the corresponding second spring plate 132, the third spring plate 133, or the fourth spring plate 134, refer to a position relationship between the first connection end 13a, the second connection end 13b, and the third connection end 13c in the first spring plate 131. Details are not described in this application again.

For example, first connection ends 13a of the four spring plates 13 are disposed corresponding to four corners of the image stabilization bracket 21 respectively, second connection ends 13b of the four spring plates 13 are all disposed corresponding to the second side portion 211b of the image stabilization bracket 21 and are spaced from each other, and third connection ends 13c of the four spring plates 13 are all disposed corresponding to the fourth side portion 211d of the image stabilization bracket 21 and are spaced from each other. The four spring plates 13 surround at least a part of the third through hole 311. The first spring plate 131 and the fourth spring plate 134 are located on a same side of the third through hole 311. The second spring plate 132 and the third spring plate 133 are located on another opposite side of the third through hole 311.

For example, the first connection end 13a of the spring plate 13 may be provided with a limiting hole 135, and second fixing ends 12b of the suspension wires 12 may be embedded in the limiting hole 135, to implement a fixed connection between the suspension wires 12 and the spring plate 13. The limiting hole 135 may be a gap formed by bending the first connection end 13a of the spring plate 13 a plurality of times, or the limiting hole 135 may be a through hole provided on the first connection end 13a of the spring plate 13. This is not limited in this application. In another embodiment, the first connection end 13a of the spring plate 13 may alternatively not include the limiting hole 135. Instead, second fixing ends 12b of the suspension wires 12 may be connected to the spring plate 13 through adhesive bonding, welding, or the like, and the first connection ends 13a of the four spring plates 13 correspond to the four suspension wires 12 respectively. For example, the first connection end 13a of the first spring plate 131 may be connected to the second fixing end 12b of the first suspension wire 121, a first connection end 13a of the second spring plate 132 may be connected to a second fixing end 12b of the second suspension wire 122, a first connection end 13a of the third spring plate 133 may be connected to a second fixing end 12b of the third suspension wire 123, and a first connection end 13a of the fourth spring plate 134 may be connected to a second fixing end 12b of the fourth suspension wire 124.

For example, the spring plate 13 may be further provided with a plurality of fixing holes 136, the plurality of fixing holes 136 correspond to the plurality of fixing posts 212 respectively, and the fixing posts 212 may be embedded in the fixing holes 136, to implement a fixed connection between the spring plate 13 and the image stabilization bracket 21.

When the image stabilization bracket 21 moves relative to the base 11 in the first direction Y or the second direction X, the four suspension wires 12 are elastically deformed. In this case, a resultant force of restoring forces generated by the four suspension wires 12 is directed opposite to a movement direction of the image stabilization bracket 21 relative to the base 11, to drive the image stabilization bracket 21 to move in a reverse direction relative to the base 11, so that the image stabilization bracket 21 moves back to an equilibrium position. This can improve motion linearity of the image stabilization bracket 21, and can also help maintain a center of the image stabilization bracket 21 in an optical axis direction, thereby improving reliability and control precision of the motor 1. In this embodiment of this application, the suspension wires 12 are connected to the image stabilization bracket 21 via the spring plate 13. In another embodiment, the second fixing ends 12b of the suspension wires 12 may alternatively be connected to the image stabilization bracket 21 via another mechanical part or may be directly connected to the image stabilization bracket 21. This is not limited in this application.

In some embodiments, the spring plate 13 may be made of a conductive material, to consider a signal transmission function.

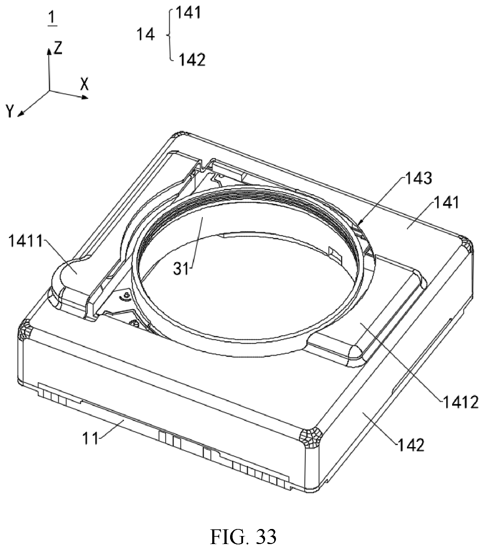

FIG. 33 is a diagram of a structure of the motor 1 shown in FIG. 4 from another perspective.

As shown in FIG. 33, for example, the motor housing 14 may include a top plate 141 and a side frame 142. The side frame 142 is connected to a peripheral edge of the top plate 141. The top plate 141 is provided with a first protrusion region 1411 and a second protrusion region 1412 that are opposite to each other.

In some embodiments, the motor housing 14 is assembled with the base 11 and covers the base 11. The motor housing 14 and the base 11 cooperate with each other to jointly enclose and protect an internal structure of the motor 1. The top plate 141 is provided with a fourth through hole 143, the fourth through hole 143 extends through the top plate 141 in the third direction Z, and a part of a structure of the motor 1 is exposed from the fourth through hole 143, for example, a part of a structure of the focusing bracket 31 is exposed.

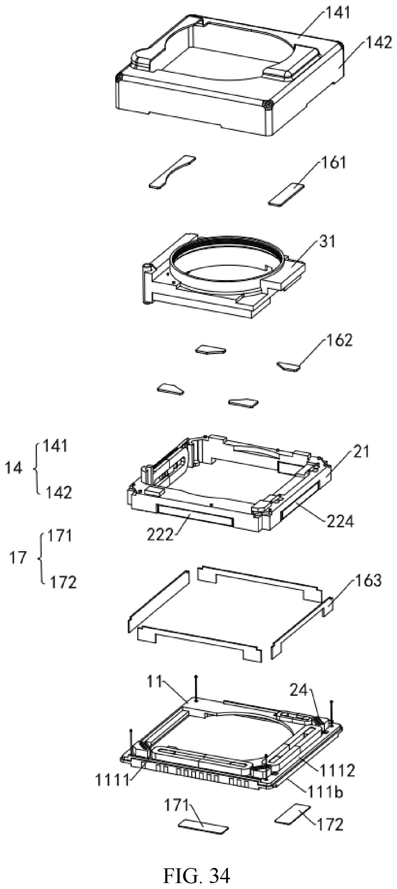

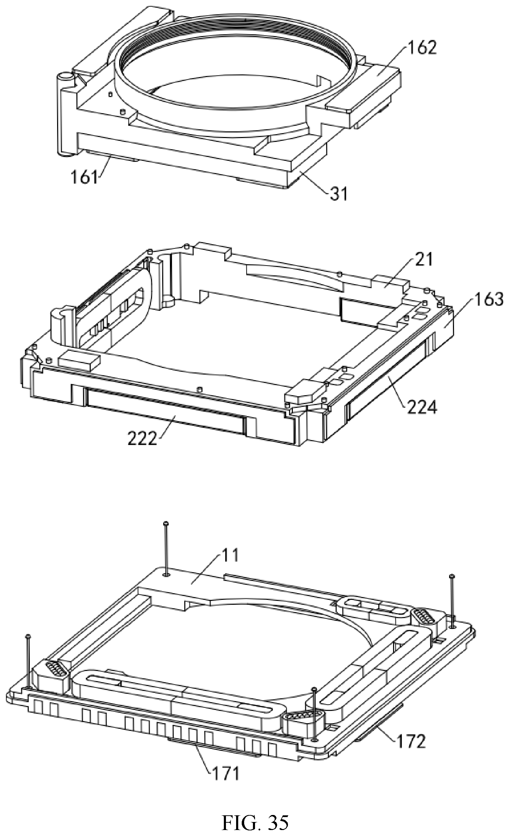

FIG. 34 is a diagram of a partial exploded structure of the motor 1 shown in FIG. 33 in some embodiments. FIG. 35 is a diagram of a partial exploded structure of the motor 1 shown in FIG. 34 in some embodiments.

As shown in FIG. 34 and FIG. 35, in some embodiments, the motor 1 may further include a first buffer member 161. The first buffer member 161 may be fixed to a surface of the focusing bracket 31 away from the bottom plate 111. There may be two first buffer members 161. The two first buffer members 161 are disposed corresponding to the first protrusion region 1411 and the second protrusion region 1412 respectively. The first buffer member 161 is disposed to reduce an impact force between the focusing bracket 31 and the motor housing 14 when the focusing bracket 31 moves upward in the third direction Z, thereby preventing the focusing bracket 31 from being damaged due to collision with the top plate 141 during movement. For example, the first buffer member 161 may be made of a flexible material such as liquid silicone rubber or foam, and the first buffer member 161 may form an integral structure with the focusing bracket 31 by using an injection molding process. In another implementation, the first buffer member 161 may alternatively be fixed to the focusing bracket 31 through bonding or the like. This is not limited in this application. For example, the two first buffer members 161 may be the same or different in size, shape, and the like. This is not limited in this application. In another embodiment, a quantity of first buffer members 161 may alternatively be one, four, or the like, which is not limited in this application.

In some embodiments, the motor 1 may further include a second buffer member 162. The second buffer member 162 may be fixed to a surface of the focusing bracket 31 facing the bottom plate 111. There may be four second buffer members 162. The four second buffer members 162 may be fixed to four corners of the focusing bracket 31. The second buffer member 162 is disposed to reduce an impact force between the focusing bracket 31 and the base 11 when the focusing bracket 31 moves downward in the third direction Z, thereby preventing the focusing bracket 31 from being damaged due to collision with the base 11 during movement. For example, the second buffer member 162 may be made of a flexible material such as liquid silicone rubber or foam, and the second buffer member 162 may form an integral structure with the focusing bracket 31 by using an injection molding process. In another implementation, the second buffer member 162 may alternatively be fixed to the focusing bracket 31 through bonding or the like. This is not limited in this application. For example, the four second buffer members 162 may be the same or different in size, shape, and the like. This is not limited in this application. In another embodiment, a quantity of second buffer members 162 may alternatively be two, three, or the like, which is not limited in this application.

In some embodiments, the motor 1 may further include a third buffer member 163. The third buffer member 163 may be fixed to a side of the image stabilization bracket 21 facing the side frame 142. There may be four third buffer members 163. The four third buffer members 163 are respectively fixed around the image stabilization bracket 21. The third buffer member 163 is disposed to reduce an impact force between the image stabilization bracket 21 and the motor housing 14 when the image stabilization bracket 21 moves relative to the base 11 on the X-Y plane, thereby preventing the image stabilization bracket 21 from being damaged due to collision with the side frame 142 during movement. For example, the third buffer member 163 may be made of a flexible material such as liquid silicone rubber or foam, and the third buffer member 163 may form an integral structure with the image stabilization bracket 21 by using an injection molding process. In another implementation, the third buffer member 163 may alternatively be fixed to the image stabilization bracket 21 through bonding or the like. This is not limited in this application. For example, the four third buffer members 163 may be the same or different in size, shape, and the like. This is not limited in this application. In another embodiment, a quantity of third buffer members 163 may alternatively be two, three, or the like, which is not limited in this application.

In some embodiments, the motor 1 may further include image stabilization magnetic attraction members 17, and the image stabilization magnetic attraction members 17 are fixed to the second surface 111b of the bottom plate 111. For example, the image stabilization magnetic attraction members 17 may include a first image stabilization magnetic attraction member 171 and a second image stabilization magnetic attraction member 172. The first image stabilization magnetic attraction member 171 is located in the first side region 1111, and faces the first image stabilization magnetic member 222, to generate a magnetic attraction force with the first image stabilization magnetic member 222, so that the image stabilization bracket 21 is magnetically attracted to the base 11. The second image stabilization magnetic attraction member 172 may be fixed to the second side region 1112, and faces the second image stabilization magnetic member 224, to generate a magnetic attraction force with the second image stabilization magnetic member 224, so that the image stabilization bracket 21 is magnetically attracted to the base 11. For example, the image stabilization magnetic attraction member 17 may use a material capable of generating a magnetic attraction force with a magnet or another magnetic component, for example, a ferromagnetic material. The first image stabilization magnetic attraction member 171 and the second image stabilization magnetic attraction member 172 may be the same or different in size, shape, and the like. This is not limited in this application. In another embodiment, the motor 1 may alternatively not include the first image stabilization magnetic attraction member 171, or the motor 1 may not include the second image stabilization magnetic attraction member 172.

In this embodiment, because the image stabilization bracket 21 has a tendency to move toward the base 11 under a magnetic force, it can be ensured that the image stabilization bracket 21 maintains in contact with the ball group 24. This implements precise guidance during movement of the image stabilization bracket 21 relative to the base 11, thereby improving reliability and precision of optical image stabilization.

The following further describes a circuit setting between the motor 1 and the module circuit board 3 in detail with reference to related accompanying drawings.

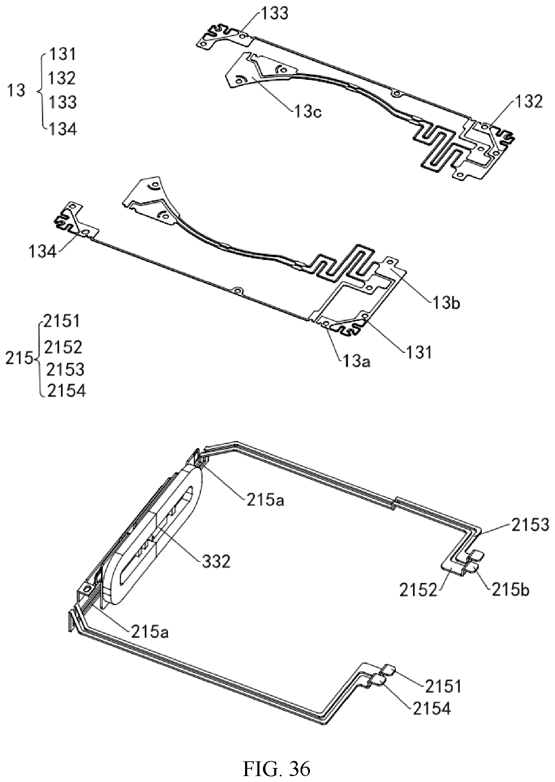

FIG. 36 is a diagram of a partial structure of an embodiment of a line for electrically connecting a focusing drive chip 332 to an external structure according to an embodiment of this application.

As shown in FIG. 36, for example, the plurality of wires 215 may include a first wire 2151, a second wire 2152, a third wire 2153, and a fourth wire 2154. The plurality of wires 215 may all be conductive wires, or may each adopt a flexible circuit board structure. This is not limited in this application.

For example, the first wire 2151 has an input end 215a and an output end 215b, and both the input end and the output end of the first wire 2151 are exposed from the image stabilization bracket 21. For example, each of the second wire 2152, the third wire 2153, and the fourth wire 2154 may also include an input end 215a and an output end 215b. For positions and the like of input ends 215a and output ends 215b in the corresponding second wire 2152, the third wire 2153, and the fourth wire 2154, refer to a position relationship between the input end 215a and the output end 215b in the first wire 2151. Details are not described in this application.

For example, the input ends 215a of the plurality of wires 215 are electrically connected to a plurality of ports of the focusing drive chip 332 via the focusing circuit board 331 respectively.

For example, the input end 215a of the first wire 2151 may be exposed from a surface of the image stabilization bracket 21 (as shown in FIG. 13). The input end 215a of the first wire 2151 may be electrically connected to an SCL signal end of the focusing drive chip 332 via the focusing circuit board 331. The output end 215b of the first wire 2151 may be exposed from the top surface 2111 of the image stabilization bracket 21 (as shown in FIG. 12). It may be understood that an SDA signal end may be used to transmit a serial data (serial data, SDA) signal of an I2C signal.

For example, the input end 215a of the second wire 2152 may be exposed from the surface of the image stabilization bracket 21 (as shown in FIG. 13). The input end 215a of the second wire 2152 may be electrically connected to the SCL signal end of the focusing drive chip 332 via the focusing circuit board 331. The output end 215b of the second wire 2152 may be exposed from the top surface 2111 of the image stabilization bracket 21 (as shown in FIG. 12), and is spaced apart from the output end 215b of the first wire 2151. It may be understood that, the SCL signal end may be used to transmit a serial clock (serial clock, SCL) signal of an I2C signal.

For example, the input end 215a of the third wire 2153 may be exposed from the surface of the image stabilization bracket 21 (as shown in FIG. 13). The input end 215a of the third wire 2153 may be electrically connected to a positive terminal of a power supply of the focusing drive chip 332 via the focusing circuit board 331. The output end 215b of the third wire 2153 may be exposed from the top surface 2111 of the image stabilization bracket 21 (as shown in FIG. 12), and is spaced apart from the output end 215b of the first wire 2151 and the output end 215b of the second wire 2152.

For example, the input end 215a of the fourth wire 2154 may be exposed from the surface of the image stabilization bracket 21 (as shown in FIG. 13). The input end 215a of the fourth wire 2154 may be electrically connected to a negative terminal of the power supply of the focusing drive chip 332 via the focusing circuit board 331. The output end 215b of the fourth wire 2154 may be exposed from the top surface 2111 of the image stabilization bracket 21 (as shown in FIG. 12), and is spaced apart from the output end 215b of the first wire 2151, the output end 215b of the second wire 2152, and the output end 215b of the third wire 2153.

In another embodiment, the first wire 2151, the second wire 2152, the third wire 2153, and the fourth wire 2154 each may adopt a flexible circuit board structure. The first wire 2151, the second wire 2152, the third wire 2153, and the fourth wire 2154 may alternatively be integrated into one flexible circuit board. Specifically, the following provides detailed descriptions with reference to related accompanying drawings.

In some embodiments, the first spring plate 131, the second spring plate 132, the third spring plate 133, and the fourth spring plate 134 may each be a metal leaf spring, and may all be deformed under stress, that is, have an elastic function. In another embodiment, the plurality of spring plates 13 may all be conductive wires, or may each adopt a flexible circuit board structure. This is not limited in this application.

For example, the second connection ends 13b of the spring plates 13 may be electrically connected to the output ends 215b of the plurality of wires 215 respectively, and the first connection ends 13a and the third connection ends 13c of the spring plates 13 may be electrically connected to external structures of the motor 1 respectively. In this case, the second connection ends 13b of the plurality of spring plates 13 are electrically connected to the focusing drive chip 332 via the plurality of wires 215 respectively. In other words, the plurality of spring plates 13 may serve as transmission channels of port signals of the focusing drive chip 332 respectively. The external structures such as the module circuit board 3 (as shown in FIG. 2) or the variable aperture 6 may be electrically connected to the focusing drive chip 332 via the first connection end 13a of the spring plate 13 or the third connection end 13c of the spring plate 13.

For example, the second connection end 13b of the first spring plate 131 may be electrically connected to the output end 215b of the first wire 2151. In this case, the first spring plate 131 may be electrically connected to an SDA signal end of the focusing drive chip 332 via the first wire 2151. The second connection end 13b of the second spring plate 132 may be electrically connected to the output end 215b of the second wire 2152. In this case, the second spring plate 132 may be electrically connected to the SCL signal end of the focusing drive chip 332 via the second wire 2152. The second connection end 13b of the third spring plate 133 may be electrically connected to the output end 215b of the third wire 2153. In this case, the third spring plate 133 may be electrically connected to a positive terminal of the power supply of the focusing drive chip 332 via the third wire 2153. The second connection end 13b of the fourth spring plate 134 may be electrically connected to the output end 215b of the fourth wire 2154. In this case, the fourth spring plate 134 may be electrically connected to the negative terminal of the power supply of the focusing drive chip 332 via the fourth wire 2154.

The second connection end 13b of the first spring plate 131 may be fixed to the output end 215b of the first wire 2151 through welding, conductive adhesive, or the like. For a manner of connecting the second connection end 13b of the second spring plate 132 to the output end 215b of the second wire 2152, a manner of connecting the second connection end 13b of the third spring plate 133 to the output end 215b of the third wire 2153, and a manner of connecting the second connection end 13b of the fourth spring plate 134 to the output end 215b of the fourth wire 2154, refer to a manner of connecting the second connection end 13b of the first spring plate 131 to the output end 215b of the first wire 2151. Details are not described herein again.

For example, the third connection end 13c of the first spring plate 131 may further be electrically connected to an SDA signal of a drive chip of the variable aperture 6 (as shown in FIG. 2). The third connection end 13c of the second spring plate 132 may be electrically connected to an SCL signal of the drive chip of the variable aperture 6. The third connection end 13c of the third spring plate 133 may be electrically connected to a positive terminal of a power supply of the drive chip of the variable aperture 6. The third connection end 13c of the fourth spring plate 134 may be electrically connected to a negative terminal of the power supply of the drive chip of the variable aperture 6. In other words, the spring plate 13 may further serve as a transmission channel between a port signal of the variable aperture 6 and a port signal of the focusing drive chip 332. The external structure such as the variable aperture 6 (as shown in FIG. 2) may be electrically connected to the variable aperture 6 via the spring plate 13.

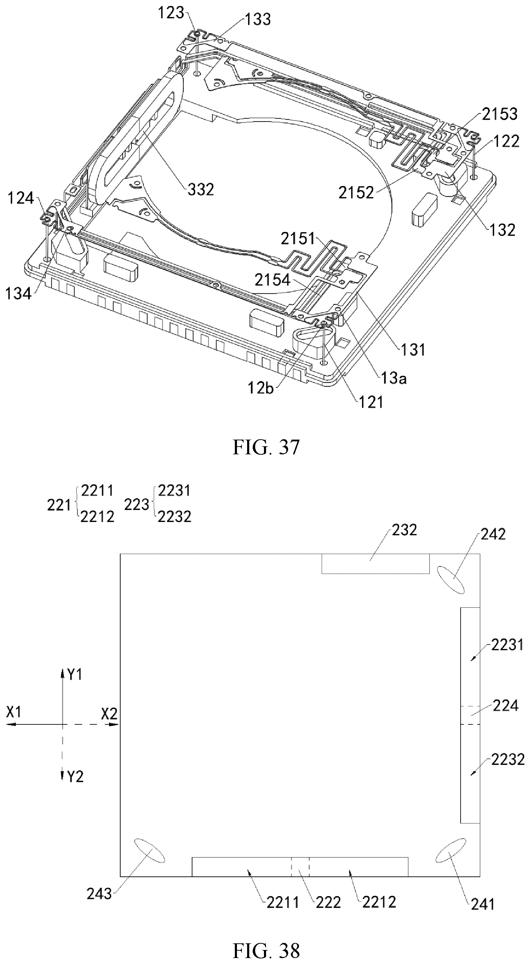

FIG. 37 is a diagram of a structure of an embodiment of a line for electrically connecting the motor 1 shown in FIG. 4 to an external structure.

As shown in FIG. 37, for example, the suspension wires 12 may be a conductive material, and the suspension wires 12 may serve as a transmission channel between the spring plate 13 and the module circuit board 3 (as shown in FIG. 4). In this case, the first fixing ends 12a (as shown in FIG. 10) of the four suspension wires 12 may be electrically connected to the four epitaxial portions 1153 (as shown in FIG. 8) respectively, and the second fixing ends 12b of the four suspension wires 12 may be electrically connected to the first connection ends 13a of the four spring plates 13 respectively, to implement an electrical connection between the focusing drive chip 332 or the variable aperture 6 (as shown in FIG. 4) and the module circuit board 3.

For example, the second fixing end 12b of the first suspension wire 121 may be electrically connected to the first connection end 13a of the first spring plate 131, the second fixing end 12b of the second suspension wire 122 may be electrically connected to the first connection end 13a of the second spring plate 132, the second fixing end 12b of the third suspension wire 123 may be electrically connected to the first connection end 13a of the third spring plate 133, and the second fixing end 12b of the fourth suspension wire 124 may be electrically connected to the first connection end 13a of the fourth spring plate 134.

In the foregoing embodiments, the image stabilization drive mechanism of the motor 1 mainly adopts a single-coil drive solution. In some other embodiments, the motor 1 may alternatively adopt a dual-coil driving solution, to provide a larger driving force, which help improves driving efficiency and increase an optical image stabilization stroke. Example are as follows.

FIG. 38 is a diagram of a partial structure of another motor 1 according to an embodiment of this application.

As shown in FIG. 38, in some embodiments, the first image stabilization coil 221 may include a first image stabilization sub-coil 2211 and a second image stabilization sub-coil 2212. The first image stabilization sub-coil 2211 may face the first image stabilization magnetic member 222, and the second image stabilization sub-coil 2212 may face the first image stabilization magnetic member 222. In other words, the first image stabilization sub-coil 2211 and the second image stabilization sub-coil 2212 can share a magnetic field generated by the first image stabilization magnetic member 222.

For example, the second image stabilization coil 223 may include a third image stabilization sub-coil 2231 and a fourth image stabilization sub-coil 2232. The third image stabilization sub-coil 2231 may face the second image stabilization magnetic member 224, and the fourth image stabilization sub-coil 2232 may face the second image stabilization magnetic member 224. In other words, the third image stabilization sub-coil 2231 and the fourth image stabilization sub-coil 2232 can share a magnetic field generated by the second image stabilization magnetic member 224.

In this case, a magnitude and direction of the current in the compensation coil 231 of the compensation mechanism 23 may be adjusted to compensate for a moment generated by the first image stabilization sub-coil 2211, the second image stabilization sub-coil 2212, the third image stabilization sub-coil 2231, and/or the fourth image stabilization sub-coil 2232 at the center of the image stabilization bracket 21, thereby ensuring that a resultant moment M4 applied to the image stabilization bracket 21 is zero and the image stabilization bracket 21 does not deflect. This helps improve control precision and reliability of the motor 1.

In the foregoing embodiment, the motor 1 mainly adopts a solution in which the suspension wire 12 provides a restoring force. In some other embodiments, the motor 1 may alternatively adopt a guiding solution using an elastic member 18. For example, this embodiment may include most of the technical solutions in the foregoing embodiments. The following mainly describes differences between this embodiment and the foregoing embodiments, and most content that is the same between this embodiment and the foregoing embodiments is not described in detail again.

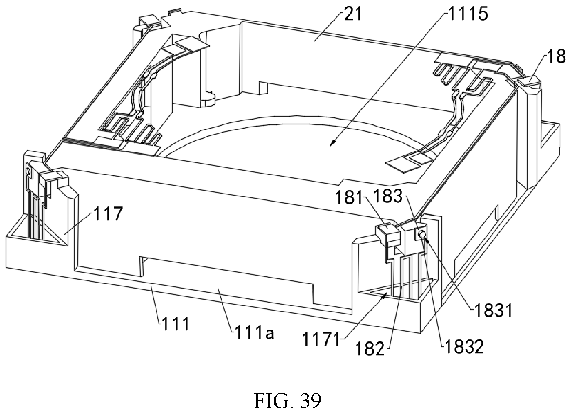

FIG. 39 is a diagram of a partial structure of another motor 1 according to an embodiment of this application.

As shown in FIG. 39, in some embodiments, the base 11 may further include four fixing blocks 117. The four fixing blocks 117 are fixed at the four corners of the bottom plate 111 respectively. The fixing block 117 may be provided with an accommodation groove 1171. The accommodation groove 1171 may be fixed to the bottom plate 111 and located on a side of the fixing block 117 away from the first through hole 1115. An opening direction of the accommodation groove 1171 may be on the same side of the bottom plate 111 as the first surface 111a. The motor 1 may further include the elastic member 18, and the elastic member 18 may be fixed to the fixing block 117. For example, there may be four elastic members 18. The four elastic members 18 may be fixed to the four fixing blocks 117 respectively. The four elastic members 18 may be the same in shape and size, and the four elastic members 18 may use a same reference numeral. It may be understood that a quantity of elastic members 18 is not limited in this application.

For example, the elastic member 18 may include a first end 181 of the elastic member 18, a middle part 182 of the elastic member 18, and a second end 183 of the elastic member 18. The middle part 182 of the elastic member 18 may be bent and connected between the first end 181 of the elastic member 18 and the second end 183 of the elastic member 18. The first end 181 of the elastic member 18 may be bent and connected to the middle part 182 of the elastic member 18. The first end 181 of the elastic member 18 may be fixed to a corresponding fixing block 117. The middle part 182 of the elastic member 18 may be mounted in the accommodation groove 1171. In this way, the fixing block 117 can serve to fix and support the elastic member 18, to implement a fixed connection between the elastic member 18 and the base 11.

For example, the second end 183 of the elastic member 18 may be provided with a positioning hole 1831, the image stabilization bracket 21 may be correspondingly provided with a positioning post 1832, and the positioning post 1832 may be embedded in the positioning hole 1831, to implement a connection between the elastic member 18 and the image stabilization bracket 21. In other words, the elastic member 18 is connected between the image stabilization bracket 21 and the base 11. When the image stabilization bracket 21 moves relative to the base 11 in the first direction Y or the second direction X, the four elastic members 18 are elastically deformed. In this case, a resultant force of restoring forces generated by the four elastic members 18 is directed opposite to a movement direction of the image stabilization bracket 21 relative to the base 11, to drive the image stabilization bracket 21 to move in a reverse direction relative to the base 11, so that the image stabilization bracket 21 moves back to an equilibrium position. This can improve motion linearity of the image stabilization bracket 21, and can also help maintain a center of the image stabilization bracket 21 in an optical axis direction, thereby improving reliability and control precision of the motor 1.

For example, the elastic member 18 may also be made of a conductive material, and the elastic member 18 may serve as a transmission channel between the spring plate 13 and the module circuit board 3.

It should be noted that embodiments of this application and features in embodiments may be combined with each other without a conflict, and any combination of features in different embodiments also falls within the protection scope of this application. In other words, the plurality of embodiments described above may be further combined based on an actual requirement.

It should be noted that all the foregoing accompanying drawings are example figures of this application, and do not represent actual sizes of products. In addition, a size proportional relationship between components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor (1), comprising a base (11), an image stabilization bracket (21), a first image stabilization magnetic member (222), a second image stabilization magnetic member (224), a first image stabilization coil (221), a second image stabilization coil (223), a compensation coil (231), and a compensation magnetic member (232), wherein the image stabilization bracket (21) is movably connected to the base (11);
the image stabilization bracket comprises a first side portion (211a), a second side portion (211b), and a connection section (210) that are sequentially connected, the first side portion (211a) and the second side portion (211b) are disposed at an included angle, the first image stabilization magnetic member (222) is fixed to the first side portion (211a), and the second image stabilization magnetic member (224) is fixed to the second side portion (211b);
both the first image stabilization coil (221) and the second image stabilization coil (223) are fixed to the base (11), the first image stabilization coil (221) faces the first image stabilization magnetic member (222) and is configured to drive the image stabilization bracket (21) to move relative to the base (11) in a first direction, the second image stabilization coil (223) faces the second image stabilization magnetic member (224) and is configured to drive the image stabilization bracket (21) to move relative to the base (11) in a second direction, and the second direction intersects with the first direction;
the compensation magnetic member (232) is fixed to the image stabilization bracket (21), the compensation coil (231) is fixed to the base (11), and the compensation coil (231) faces the compensation magnetic member (232);
the first image stabilization magnetic member (222) has a first axis (21a), and the first axis (21a) passes through a center of the first image stabilization magnetic member (222) and is parallel to the first direction;
the second image stabilization magnetic member (224) has a second axis (21b), and the second axis (21b) passes through a center of the second image stabilization magnetic member (224) and is parallel to the second direction; and
a center of the compensation magnetic member (232) is offset from both the first axis (21a) and the second axis (21b).

2. The motor (1) according to claim 1, wherein the compensation magnetic member (232) is offset from both the first axis (21a) and the second axis (21b).

3. The motor (1) according to claim 1 or 2, wherein the connection section (210) comprises a third side portion (211c) and a fourth side portion (211d), the third side portion (211c) is connected between the second side portion (211b) and the fourth side portion (211d), the first side portion (211a) and the third side portion (211c) are disposed opposite to each other, and the second side portion (211b) and the fourth side portion (211d) are disposed opposite to each other; and
the compensation magnetic member (232) is fixed to the third side portion (211c) or the fourth side portion (211d).

4. The motor (1) according to claim 3, wherein the compensation magnetic member (232) is located on a side of the first axis (21a) close to the second image stabilization magnetic member (224).

5. The motor (1) according to any one of claims 1 to 4, wherein a winding plane of the compensation coil (231) is perpendicular to a third direction, and the third direction is perpendicular to the first direction and the second direction.

6. The motor (1) according to any one of claims 1 to 5, wherein the compensation magnetic member (232) comprises one or more magnets, or the compensation magnetic member (232) is a Halbach array.

7. The motor (1) according to any one of claims 1 to 6, wherein a length of the compensation magnetic member (232) is less than a length of the first image stabilization magnetic member (222) and a length of the second image stabilization magnetic member (224).

8. The motor (1) according to any one of claims 1 to 7, wherein the motor (1) further comprises a first position sensor (225), a second position sensor (226), and a third position sensor (233);
the first position sensor (225) is fixed to the base (11), to detect a first magnetic field variation of the first image stabilization magnetic member (222) when the image stabilization bracket (21) moves in the first direction;
the second position sensor (226) is fixed to the base (11), to detect a second magnetic field variation of the second image stabilization magnetic member (224) when the image stabilization bracket (21) moves in the second direction; and
the third position sensor (233) is fixed to the base (11), to detect a third magnetic field variation of the compensation magnetic member (232) when the image stabilization bracket (21) moves in the first direction, and obtain a deflection amount of the image stabilization bracket (21) based on the third magnetic field variation and the first magnetic field variation; and further detect a fourth magnetic field variation of the compensation magnetic member (232) when the image stabilization bracket (21) moves in the second direction, and obtain a deflection amount of the image stabilization bracket (21) based on the fourth magnetic field variation.

9. The motor (1) according to any one of claims 1 to 8, wherein the motor (1) further comprises a ball group (24), the image stabilization bracket (21) is movably connected to the base (11) via the ball group (24), and the ball group (24) is spaced apart from the compensation coil (231).

10. The motor (1) according to claim 9, wherein the motor (1) comprises a first ball group (241), a second ball group (242), and a third ball group (243);
the first ball group (241) is connected to a junction between the first side portion (211a) and the second side portion (211b), the second ball group (242) is connected to a junction between the second side portion (211b) and the third side portion (211c), and the third ball group (243) is connected to a junction between the fourth side portion (211d) and the first side portion (211a); and
the compensation magnetic member (232) is disposed close to the second ball group (242).

11. The motor (1) according to claim 9, wherein the base (11) comprises a bottom plate (111) and a first metal member (116), and the first metal member (116) is embedded in the bottom plate (111); and
the bottom plate (111) is provided with a groove (113), the first metal member (116) comprises a support portion (1162), a material of the support portion (1162) comprises a metal material, at least a part of the support portion (1162) is exposed from the groove (113), and the ball group (24) is located in the groove (113) and is in contact with the support portion (1162).

12. The motor (1) according to claim 11, wherein the first metal member (116) further comprises a reinforcement portion (1161), and the reinforcement portion (1161) is connected to the support portion (1162) and is located on a side of the support portion (1162) away from the ball group (24).

13. The motor (1) according to any one of claims 1 to 12, wherein the motor (1) further comprises a first image stabilization magnetic attraction member (171), and the first image stabilization magnetic attraction member (171) is fixed to the base (11) and faces the first image stabilization magnetic member (222); and/or
the motor (1) further comprises a second image stabilization magnetic attraction member (172), and the second image stabilization magnetic attraction member (172) is fixed to the base (11) and faces the second image stabilization magnetic member (224).

14. The motor (1) according to any one of claims 1 to 13, wherein the motor (1) further comprises:
a focusing bracket (31), wherein the focusing bracket (31) is located on an inner side of the image stabilization bracket (21) and is movably connected to the image stabilization bracket (21);
a focusing magnetic member (322), fixed to the image stabilization bracket (21); and
a focusing coil (321), fixed to the focusing bracket (31), wherein the focusing coil (321) faces the focusing magnetic member (322) to drive the focusing bracket (31) to move relative to the base (11) in the third direction, and the third direction intersects with the first direction.

15. The motor (1) according to claim 14, wherein the motor (1) further comprises four suspension wires (12); and
the suspension wire (12) comprises a first fixing end (12a) and a second fixing end (12b), the first fixing ends (12a) of the four suspension wires (12) are fixed at four corners of the base (11) respectively, and the second fixing ends (12b) of the four suspension wires (12) are connected to four positions of the image stabilization bracket (21) respectively.

16. The motor (1) according to claim 15, wherein the motor (1) further comprises a focusing drive chip (332), a plurality of wires (215), and a plurality of spring plates (13), the focusing drive chip (332) is fixed to the image stabilization bracket (21), the plurality of wires (215) are spaced apart and embedded in the image stabilization bracket (21), and the plurality of spring plates (13) are spaced apart and fixed to the image stabilization bracket (21);
input ends (215a) of the plurality of wires (215) are electrically connected to a plurality of ports of the focusing drive chip (332) respectively, and first connection ends (13a) of the plurality of spring plates (13) are electrically connected to output ends of the plurality of wires (215) respectively;
the base (11) comprises the bottom plate (111) and four conductive members (115), and the conductive members (115) are spaced apart and embedded in the bottom plate (111); and
second connection ends (13b) of the plurality of spring plates (13) are electrically connected to the four conductive members (115) via the four suspension wires (12) respectively.

17. The motor (1) according to claim 16, wherein the base (11) is provided with mounting holes (1116), and the four mounting holes (1116) are located at the four corners of the base (11); and
the conductive members (115) are provided with through holes (1154), the through holes (1154) of the four conductive members (115) correspond to the four mounting holes (1116) respectively, the through holes (1154) are exposed from the mounting holes (1116), and the first fixing ends (12a) of the four suspension wires (12) extend into the through holes (1154) respectively.

18. The motor (1) according to any one of claims 14 to 17, wherein the motor (1) further comprises a guide rod (34), and the guide rod (34) is fixed to the image stabilization bracket (21) or the guide rod (34) is fixed to the focusing bracket (31); and
the focusing bracket (31) is slidably connected to the image stabilization bracket (21) via the guide rod (34), and the guide rod (34) is made of a ceramic material.

19. The motor (1) according to any one of claims 14 to 17, wherein the motor (1) further comprises a first buffer member (161), and the first buffer member (161) is connected to a side of the focusing bracket (31) away from the base (11);
the motor (1) further comprises a second buffer member (162), and the second buffer member (162) is connected to a side of the focusing bracket (31) facing the base (11); and/or
the motor (1) further comprises a third buffer member (163), and the third buffer member (163) is connected to an outer peripheral surface of the image stabilization bracket (21).

20. A camera module (100), comprising a lens (2), an image sensor (4), and the motor (1) according to any one of claims 1 to 19, wherein the lens (2) is mounted in the motor (1), the image sensor (4) is located on a light output side of the lens (2), and the motor (1) is fixed to the image sensor (4).

21. The camera module (100) according to claim 20, wherein the camera module (100) further comprises a variable aperture (6), and the variable aperture (6) is located on a light input side of the lens (2).

22. An electronic device (1000), comprising a device housing (200) and the camera module (100) according to claim 20 or 21, wherein the camera module (100) is disposed in the device housing (200).
